# EUROPÄISCHE PATENTSCHRIFT

(11) **EP 2 658 707 B1**
(45) Veröffentlichungstag und Bekanntmachung des Hinweises auf die Patenterteilung: **02.09.2015**
(21) Anmeldenummer: 11787635.9
(22) Anmeldetag: 31.10.2011
(51) Int. Cl.: B30B 9/30, B65F 3/20, B02C 18/22, B65G 25/08

(54) **FÖRDER- UND/ODER PRESSEINRICHTUNG MIT EINER VORGESCHALTETEN ZUFÜHREINRICHTUNG**
CONVEYING DEVICE AND/OR PRESS HAVING A FEED DEVICE CONNECTED UPSTREAM
DISPOSITIF DE TRANSPORT ET/OU DE PRESSAGE AVEC UN DISPOSITIF D'ALIMENTATION MONTÉ EN AMONT

(30) Priorität: 01.06.2011 DE 102011076851; 14.12.2010 DE 102010063049; 12.11.2010 DE 102010043820
(43) Veröffentlichungstag der Anmeldung: 06.11.2013
(73) Patentinhaber: SIB Strautmann Ingenieurbüro GmbH, 49219 Glandorf (DE)
(72) Erfinder: STRAUTMANN, Wolfgang, 49196 Bad Laer (DE)
(74) Vertreter: Linnemann, Winfried
(86) Internationale Anmeldenummer: PCT/EP2011/069137
(87) Internationale Veröffentlichungsnummer: WO 2012/062617

(56) Entgegenhaltungen:
- EP-A1- 0 659 659
- WO-A1-2010/094306
- DE-A1- 2 229 764
- DE-A1- 2 926 310
- DE-A1- 2 944 307
- DE-A1- 10 221 827

## Beschreibung

Die vorliegende Erfindung betrifft eine Förder- und/oder Presseinrichtung, insbesondere einer Ballenpresse oder eines Sammelbehälters, mit einer vorgeschalteten Zuführeinrichtung mit einem Einfüllraum für Pressgut, wobei der Boden des Einfüllraums in Form eines Zylindermantelabschnitts gebogen ist, wobei im Einfüllraum eine mittels eines Kraftantriebes hin und her verschwenkbare Fördereinrichtung vorgesehen ist, deren Schwenkachse mit einer gedachten Mittelachse des Zylindermantelabschnitts zusammenfällt, wobei die Fördereinrichtung eine Förderschwinge mit einem mit zwei Förderschwingenarmen unbeweglich verbundenen Förderkopf ist, wobei der Förderkopf über den Boden hin und her bewegbar ist, wobei ein Raum radial innen vom Förderkopf zwischen den Schwingenarmen der Förderschwinge einen Durchgang von Pressgut erlaubend stets frei ist und wobei an den Übergabebereich anschließend eine drehantreibbare Rotorwalze oder zwei parallele, gegensinnig drehantreibbare Rotorwalzen zur weiteren Förderung und/ oder zum Pressen des Pressguts angeordnet ist/sind, gemäss dem Oberbegriff des Anspruchs 1.

Eine Einrichtung mit den vorstehend genannten Merkmalen ist aus dem Dokument WO 2010/094306 A1 bekannt. Konkret betrifft dieses Dokument eine Zerkleinerungsvorrichtung zum Zerkleinern von Material, die einen Materialaufnahmeraum, in den das zu zerkleinernde Material einfüllbar ist, einen Rotor und eine Nachdrückeinrichtung mit einem Nachdrücker und einer Antriebseinrichtung für den Nachdrücker umfasst. Dabei ist der Nachdrücker derart um eine Achse schwenkbar, dass er das zu zerkleinernde Material zum Rotor drückt. Der Nachdrücker verbleibt im Betrieb vollständig im Materialaufnahmeraum. Der Rotor liegt an der tiefsten Stelle des Materialaufnahmeraums und dementsprechend fällt der Boden des Einfüllraums von beiden Seiten des Rotors her in Richtung zum Rotor hin ab. In den Arbeitsbereich des Rotors gelangt das zu zerkleinernde Gut also durch die Schwerkraft. Ein Fördern des Guts zum Rotor ist hier nicht erforderlich und erfolgt hier auch nicht. Das zu zerkleinernde Gut wird mittels des Nachdrückers gegen den Rotor gedrückt, damit es vom Rotor zuverlässiger erfasst wird.

Als Zuführeinrichtung für eine drehantreibbare Rotorwalze oder zwei parallele, gegensinnig drehantreibbare Rotorwalzen zur weiteren Förderung und/oder zum Pressen des Pressguts in einer Einrichtung der eingangs genannten Art ist der Nachdrücker gemäß dem vorgenannten Dokument nicht geeignet, weil es mit ihm zwangsläufig zu einer Zuförderung einer zu großen Gutmenge käme, die leicht zu Störungen des Betriebes, insbesondere zu Verstopfungen an der Rotorwalze oder den Rotorwalzen, führen würde, wenn das von dem Nachdrücker zugeförderte Pressgut nicht schnell genug weiterverarbeitet werden kann.

Aus der WO2008/113465 A1 ist eine Presse mit einer Beschickungseinrichtung bekannt, wobei der Presse mittels der Beschickungseinrichtung Pressgut aus einem Einfüllraum zuführbar ist. Ein Boden des Einfüllraums ist in Form eines Zylindermantelabschnitts gebogen und die Zuführeinrichtung ist durch ein im Einfüllraum mittels eines Kraftantriebs verschwenkbares flächiges Förderschild gebildet, dessen Schwenkachse mit einer gedachten Mittelachse des Zylindermantelabschnitts zusammenfällt.

Als nachteilig wird auch hier angesehen, dass es leicht zu Störungen des Betriebes, insbesondere zu Verstopfungen in einer dem Einfüllraum nachgeschalteten Förder- oder Presseinrichtung, kommen kann, wenn das von dem Förderschild zugeförderte Pressgut nicht schnell genug von der Förder- und/oder Presseinrichtung weiterverarbeitet werden kann. Das Pressgut wird in der Regel manuell in den Einfüllraum eingebracht, sodass es hier zu relativ großen Schwankungen der Pressgutmenge, die sich gerade im Einfüllraum befindet, kommt. Eine zu große Pressgutmenge im Einfüllraum kann eine Umkehrung der Arbeitsrichtung der Förder- und/oder Presseinrichtung erforderlich machen und/oder einen hohen Arbeitsaufwand zum manuellen Entfernen von überschüssigem oder schon festsitzendem und eingeklemmtem Pressgut erfordern, wodurch unnötige Gefahren für das Bedienungspersonal und unproduktive Stillstandszeiten der Presse entstehen. Um dem Problem abzuhelfen, ist entweder eine laufende Beobachtung und Überwachung durch eine bedarfsweise eingreifende fachkundige Bedienungsperson nötig oder es müssen relativ aufwändige technische Einrichtungen vorgesehen werden, mit denen die Menge des jeweils der Förder- und/oder Presseinrichtung zugeführten Pressguts überwacht und passend reguliert wird, z.B. indem der Hub und/oder die Schwenkgeschwindigkeit des Pressschildes bedarfsgerecht verändert werden. Weiterhin kann sich bei einem flächigen Förderschild Pressgut hinter dem Förderschild sammeln und entweder, bei nicht geschlossenem Behälter, den Arbeitsplatz verunreinigen oder, bei geschlossenem Behälter, das Förderschild in seinem Rückhub begrenzen und zu einem Verklemmen des Förderschildes führen.

Aus der DE 78 10 147 U1 ist ein Müllbehälter bekannt, bei dem eine Presseinrichtung in Form eines in einem Einfüllraum an einem Schwenkarm verschwenkbaren Presskolbens mit dreieckigem Querschnitt ausgebildet ist. Der Presskolben gleitet entlang eines Bodens des Einfüllraums, wobei der Boden entsprechend dem Außenradius des verschwenkbaren Presskolbens gekrümmt ist. Somit kann das Pressgut durch einen Durchlass aus dem Einfüllraum in den eigentlichen Behälterinnenraum gefördert werden. Dabei ist der Durchlass an den tiefsten Bereich des Bodens des Einfüllraums anschließend angeordnet. Das Pressen des Pressguts erfolgt allein durch den verschwenkbaren Presskolben.

Als nachteilig wird bei diesem Müllbehälter angesehen, dass es leicht zu Störungen beim Pressvorgang kommen kann, wenn sich eine größere Menge an Pressgut, insbesondere sperriger Art, wie Kartonagen, im Einfüllraum befindet. In diesem Fall kann sich Pressgut vor dem Durchlass so stauen, dass der Presskolben nicht mehr in der Lage ist, seine vorgesehene Schwenkbewegung vollständig, d.h. bis zu dem behälterseitigen Umkehrpunkt, auszuführen. In solchen Fällen muss bei stillgesetztem Presskolben überschüssiges Pressgut manuell aus dem Einfüllraum entfernt werden, was aufwendig ist und sogar gefährlich sein kann und wodurch unproduktive Stillstandszeiten entstehen. Zudem ist die mit dem Presskolben erreichbare Verdichtung des Pressguts eher gering, was den heutigen Ansprüchen nach einer möglichst hohen Verdichtung nicht mehr genügt

Für die vorliegende Erfindung stellt sich daher die Aufgabe, eine Förder- und/oder Presseinrichtung mit einer vorgeschalteten Zuführeinrichtung der eingangs genannten Art zu schaffen, die die vorstehend angegebenen Nachteile behebt und die bei einer technischen einfachen Konstruktion einen störungsfreien, zuverlässigen Betrieb, insbesondere eine Verstopfungen und Stillstandszeiten vermeidende Zuführung des Pressguts, gewährleistet.

Die Lösung dieser Aufgabe gelingt erfindungsgemäß mit einer Förder- und/oder Presseinrichtung gemäss Anspruch 1.

Mit der Erfindung wird eine Förder- und/oder Presseinrichtung mit einer vorgeschalteten Zuführeinrichtung geschaffen, bei der durch den zum Pressgut-Übergabebereich hin ansteigenden Boden und durch den Einsatz der Förderschwinge mit dem Förderkopf ein Verstopfen der Förder- und/oder Presseinrichtung wirkungsvoll vermieden wird. Erreicht wird dies dadurch, dass zum einen bei einer Vorwärtsbewegung der Förderschwinge mit dem Förderkopf in Richtung nach oben zum Übergabebereich ein Teil des Pressguts über den Förderkopf hinweg zurück in den Einfüllraum fällt und dass zum anderen bei einer Rückbewegung der Schwinge von dem Übergabebereich weg nach unten das noch nicht von der Rotorwalze oder den Rotorwalzen erfasste Pressgut aufgrund seines Eigengewichts selbsttätig wieder zum tiefsten Punkt des gekrümmten Bodens zurück fällt oder rutscht. Die Erfindung bietet also zwei Vorteile, nämlich dass immer nur eine begrenzte Menge an Pressgut in den Übergabebereich transportiert wird und dass kein überschüssiges Pressgut im Pressgutübergabebereich verbleibt. Somit kann es praktisch nicht mehr zu Verstopfungen und/oder Überlastungen der nachfolgenden angetriebenen Elemente der Förder- und/oder Presseinrichtung, konkret der drehantreibbaren Rotorwalze oder zwei parallelen, gegensinnig drehantreibbaren Rotorwalzen, kommen. Die maximal zugeführte Menge an Pressgut ist begrenzt, weil die wirksame fördernde Fläche des Förderkopfes der Förderschwinge eine begrenzte Größe hat, die kleiner ist als z.B. die Fläche eines aus dem Stand der Technik bekannten Förderschildes. Überschüssiges Pressgut fällt oder rutscht selbsttätig aus dem Pressgutübergabebereich über den Förderkopf hinweg wieder nach unten. Somit werden unproduktive Stillstandszeiten der Förder- und/oder Presseinrichtung sowie ein aufwendiges und unter Umständen gefährliches manuelles Entfernen von Pressgut aus dem Pressgutübergabebereich zur Verstopfungsbeseitigung wirkungsvoll vermieden.

Der Einfüllraum ist z. B. durch einen Kasten mit vorzugsweise metallischen Wänden gebildet und weist oberseitig eine Öffnung zum Einfüllen von Pressgut, wie z.B. Kartonagen oder leere Kunststoffflaschen, auf. Durch die Zuführeinrichtung erfolgt bereits ein erstes Verdichten des Pressguts, das dann mittels der nachgeschalteten Komponenten weiter verdichtet wird.

Für die gewünschte begrenzte Förderwirkung des Förderkopfes der Förderschwinge hat es sich als günstige Gestaltung herausgestellt, wenn in Radialrichtung der Förderschwinge gesehen der Förderkopf vom Boden ausgehend eine Höhe hat, die sich über maximal 25%, vorzugsweise über 10 bis 20%, des Radius der Förderschwinge erstreckt. Im Verhältnis zum Radius der Förderschwinge ist also die Höhe des auf das Pressgut eine Förderwirkung ausübende Förderkopfes relativ klein. Dennoch ist bei dem derart niedrigen Förderkopf eine ausreichend große und ausreichend zuverlässige Förderwirkung gewährleistet. Als Radius der Förderschwinge wird hier der Abstand von ihrer Schwenkachse bis zu der dem Boden des Einfüllraums zugewandten Unterseite des Förderkopfes gesehen.

Zur Erzielung der gewünschten Förderwirkung der Förderschwinge beträgt zweckmäßig der Winkel, über den die Förderschwinge verschwenkbar ist, zwischen 60° und 180°, vorzugsweise zwischen 90° und 150°. Mit einem Schwenkwinkel innerhalb dieses Schwenkwinkelbereichs wird gewährleistet, dass die Förderschwinge mit dem Förderkopf sowohl in Förderrichtung vom tiefsten Bereich des Einfüllraums nach oben zum Übergabebereich als auch gegen die Förderrichtung vom tiefsten Bereich des Einfüllraums vom Übergabebereich weg einen ausreichend großen Schwenkwinkel überstreicht und zwar sowohl zur Förderung des Pressguts zum Übergabebereich als auch zu einem sicheren Überführen von Pressgut von der Rückseite des Förderkopfes zu dessen Vorderseite. Der im Einzelfall zu verwendende optimale Schwenkwinkel richtet sich nach der Konstruktion von Einfüllraum und Förderschwinge im Detail und nach den Eigenschaften des zu verarbeitenden Pressguts.

Um das gewünschte Zurückfallen oder Zurückrutschen des noch nicht von der Rotorwalze oder den Rotorwalzen erfassten Pressguts beim Verschwenken der Förderschwinge vom Übergabebereich weg sicher zu erreichen, weist bevorzugt der Boden des Einfüllraums in dem Übergabebereich unmittelbar vor der Rotorwalze oder den Rotorwalzen einen Steigungswinkel α zwischen 25° und 90°, vorzugsweise zwischen 45° und 65°, zur Horizontalen auf.

Eine Weiterbildung schlägt vor, dass der Förderkopf der Förderschwinge mit einer gegen die Förderrichtung weisenden, unter einem flachen, stumpfen Winkel β schräg zum Boden verlaufenden Rückseite ausgebildet ist. Mit dieser Gestaltung der Förderschwinge wird erreicht, dass bei einer Bewegung der Förderschwinge gegen ihre Förderrichtung zum hinteren, d.h. dem Übergabebereich abgewandten Umkehrpunkt, der Förderkopf das unten im Behälter liegende Pressgut untergreift oder unterfährt. Dabei wird Pressgut, welches sich zunächst an der Rückseite des Förderkopfes befindet, über den Förderkopf hinweg bewegt und so auf die Vorderseite des Förderkopfes transportiert, um es dann mit dem nächsten Schwingenhub in Förderrichtung zum Übergabebereich zu fördern.

Weiter wird vorgeschlagen, dass der Förderkopf der Förderschwinge mit einer in Förderrichtung zum Übergabebereich weisenden und rechtwinklig zum Boden verlaufenden Vorderseite ausgebildet ist. Mit dieser Gestaltung der Förderschwinge und ihres Förderkopfes wird erreicht, dass der Förderkopf in Förderrichtung das Pressgut zuverlässig in ausreichender, aber nicht zu großer Menge zum Übergabebereich hin fördert. Unter rechtwinklig soll hier ein Winkel von 90° ±20° verstanden werden.

Eine weitere Ausgestaltung schlägt vor, dass der Förderkopf der Förderschwinge an einer in Förderrichtung zum Übergabebereich weisenden Vorderseite Mitnehmer trägt, die um eine parallel zur Vorderseite hinter dieser verlaufende Schwenkachse passiv verschwenkbar sind. Mittels der passiv verschwenkbaren Mitnehmer wird die für die Förderung des Pressguts wirksame Fläche der Vorderseite des Förderkopfes bei dessen Bewegung in Förderrichtung selbsttätig vergrößert, indem im Einfüllraum befindliches Pressgut gegen die Mitnehmer drückt und diese dadurch nach oben verschwenkt werden. Bei der umgekehrten Bewegung des Förderkopfes fallen die Mitnehmer durch ihr Eigengewicht zurück, so dass sie bei der Rückwärtsbewegung des Förderkopfes den Übertritt von Pressgut über den Förderkopf hinweg nicht behindern.

Eine diesbezügliche Weiterbildung sieht vor, dass die Mitnehmer als vertikal ausgerichtete, in ihrer Grundform spitzwinklig dreieckige Platten oder Körper ausgeführt sind, wobei deren Schwenkachse durch die spitze, hintere Ecke des Dreiecks verläuft und wobei eine vordere obere Ecke mit wenigstens einem über den Förderkopf vorstehenden Zahn ausgebildet ist. Aufgrund der angegebenen Form der Mitnehmer verschwinden diese bei der Rückwärtsbewegung praktisch vollständig innerhalb des Förderkopfes. Der Zahn sorgt für einen guten Eingriff zwischen Pressgut und Mitnehmer bei der Förderbewegung des Förderkopfes, so dass die Mitnehmer zuverlässig ausgeklappt werden, wenn sie auf das Pressgut treffen.

Bei der Schwenkbewegung der Förderschwinge wird deren Förderkopf mit einem möglichst geringen Abstand über den Boden geführt; es kann aber dennoch dazu kommen, dass zwischen der Unterseite des Förderkopfes der Förderschwinge und dem Boden des Einfüllraumes flaches Pressgut eingeklemmt wird, was zu einer Schwergängigkeit oder im Extremfall zu einem Blockieren der Förderschwinge führen kann. Außerdem bleibt dieses flache Pressgut liegen und wird vom Förderkopf der Förderschwinge nicht zum Übergabebereich gefördert. Um diesem Problem abzuhelfen bzw. vorzubeugen, wird vorgeschlagen, dass der Boden des Einfüllraums auf seiner Oberseite parallele Rippen aufweist, die in Bewegungsrichtung der Förderschwinge verlaufen. Der Abstand der Rippen richtet sich nach den Flächendimensionen des zu verarbeitenden Pressguts und ist zweckmäßig so gewählt, dass das Pressgut zumindest zum größten Teil nicht zwischen zwei benachbarte Rippen passt, sondern auf den Rippen liegt. Die Rippen können einstückig an den Boden angeformt oder separat angebracht sein. Mittels der Rippen wird das Pressgut in einer etwas vom eigentlichen Boden beabstandeten Lage gehalten, was für ein zuverlässiges Erfassen des Pressguts durch den Förderkopf sorgt.

Zur weiteren Verbesserung der Förderwirkung des Förderkopfes können an der Vorderseite des Förderkopfes zwischen die Rippen greifende Förderzinken angeordnet sein. Die Förderzinken können je nach Pressguteigenschaften unterschiedliche Breite, maximal die Breite des Zwischenraumes zwischen je zwei benachbarten Rippen, haben und aus unterschiedlichem Material gefertigt sein, z.B. aus Kunststoff oder aus Metall, wie Stahl.

Bevorzugt ist dabei weiter vorgesehen, dass die Förderzinken gelenkig mit dem Förderkopf verbunden sind. Beim Zurückbewegen des Förderkopfes werden diese Förderzinken von auf dem Boden liegendem flachem Pressgut nach vorne und oben gedrückt und lassen so das Pressgut darunter passieren. Beim Vorwärtsbewegen des Förderkopfes werden diese Zinken, wenn sie gegen das Pressgut treffen, nach hinten und unten, zweckmäßig gegen einen Anschlag, geschwenkt und schieben dann zuverlässig das erfasste Pressgut vor sich her zum Übergabebereich.

Eine besonders wirksame Förderung von flachem Pressgut durch die Förderzinken wird erreicht, wenn jeder Rippe ein Paar von zwei Förderzinken des Förderkopfes zugeordnet ist, die beiderseits der Rippe verlaufen.

Die Förderzinken sind zweckmäßig als einzeln mit dem Förderkopf verbundene Finger oder als mit dem Förderkopf verbundener Zinkenkamm ausgeführt. In der ersten Ausführung können bei Bedarf einzelne Förderzinken ausgetauscht werden; in der zweiten Ausführung ist das Anbringen und Abbauen der Förderzinken durch deren Zusammenfassung in einem Bauteil vereinfacht.

Wenn Pressgut, das auch krümelige Anteile enthält, verarbeitet werden soll, ist es zweckmäßig, dass an der Vorderseite des Förderkopfes eine Bürste oder eine Reihe aus mehreren Bürsten angeordnet ist. Bei der Schwenkbewegung der Förderschwinge fegt die Bürste oder Bürstenreihe den Boden des Einfüllraums ab und fördert so auch kleinteiliges Pressgut zum Übergabebereich. Dabei besteht die Möglichkeit, dass an jedem Förderzinken eine Bürste angeordnet ist. So kann ein Austausch der Bürsten zusammen mit den Förderzinken bei Bedarf schnell erfolgen. Wenn die Förderzinken gelenkig, insbesondere verschwenkbar, am Förderkopf angeordnet sind, machen die Bürsten die Schwenkbewegung der Förderzinken mit und fegen nur bei der Vorwärtsbewegung der Förderschwinge über den Boden des Einfüllraums, während sie bei deren Rückwärtsbewegung über das kleinteilige oder krümelige Pressgut hinweggehen.

Da verschiedene zu verarbeitenden Pressgüter unterschiedliche Eigenschaften haben, ist es vorteilhaft, wenn der Förderkopf an unterschiedliche Pressgüter anpassbar ist. Hierzu schlägt die Erfindung vor, dass die Vorderseite des Förderkopfes in ihrer Höhe verstellbar ist. Hiermit kann die Menge des zum Übergabebereich geförderten Pressguts nicht nur durch die Schwenkfrequenz oder -geschwindigkeit der Förderschwinge geregelt werden, sondern auch durch die Flächengröße des Förderkopfes.

In einer weiteren Ausgestaltung ist vorzugsweise der Förderkopf als im Querschnitt dreieckiger Hohlkörper ausgeführt, wobei die Vorderseite des Förderkopfes aus zwei aufeinander liegenden, gegeneinander in dessen Höhenrichtung verschiebbaren und relativ zueinander fixierbaren Wandteilen besteht. Somit kann die Höhe der Vorderseite des Förderkopfes bedarfsgerecht eingestellt werden. Dabei ist zweckmäßig mit dem einen Wandteil der Vorderseite eine die Rückseite des Förderkopfes bildende Rückwand und mit dem anderen Wandteil der Vorderseite eine die Unterseite des Förderkopfes bildende Unterwand verbunden oder einstückig ausgeführt. An ihrem jeweils von dem Vorderseiten-Wandteil entfernten Ende sind die Rückwand und die Unterwand zweckmäßig gelenkig oder biegsam miteinander verbunden. Hierdurch behält der Förderkopf bei jeder eingestellten Höhe seiner Vorderseite im Querschnitt seine Dreiecksform ohne die Funktion störende überstehende Kanten.

Um Pressgut von der Rückseite der Förderschwinge über diese hinweg zuverlässig zur Vorderseite der Förderschwinge zu transportieren, ist weiter vorgesehen, dass der in Form eines Zylindermantelabschnitts gebogene Boden an seinem von dem Übergabebereich entfernten Ende in einen gleichsinnig stärker und über die Vertikale hinaus gebogenen Pressgutrückführbogen übergeht. Hiermit wird erreicht, dass Pressgut anschaulich gesagt "über Kopf" von der Rückseite zur Vorderseite der Förderschwinge transportiert wird, wenn die Förderschwinge sich in den Bereich des von dem Übergabebereich entfernten Umkehrpunktes ihrer Schwenkbewegung bewegt.

Eine weitere Ausgestaltung sieht vor, dass dem Einfüllraum an seiner von dem Übergabebereich entfernt liegenden Seite ein Pressgutaufgabetisch vorgeschaltet ist, über dessen Oberfläche Pressgut in den Einfüllraum einschiebbar ist. Der Pressgutaufgabetisch erhöht die Sicherheit der Bedienung, da der Pressgutaufgabetisch dafür sorgt, dass das Bedienungspersonal zwangsläufig einen gewissen Abstand von den beweglichen Teilen, insbesondere von der Förderschwinge, einhält. Zugleich erleichtert der Pressgutaufgabetisch das Beschicken der Zuführeinrichtung mit Pressgut, da das Bedienungspersonal in einem ersten Schritt das Pressgut auf dem Pressgutaufgabetisch ablegt und dann erst durch Vorschieben auf dem Pressgutaufgabetisch in den Einfüllraum befördert.

Eine weitere Maßnahme zur Erhöhung der Arbeitssicherheit des Bedienungspersonals besteht darin, dass bevorzugt der Boden des Einfüllraums in einem an den Pressgutaufgabetisch angrenzenden Bereich mit einem parallel mit der der Förderschwinge verschwenkbaren Bodenteil ausgeführt ist, wobei der Bodenteil bei über den Pressgutaufgabetisch reichender Lage der Förderschwinge den Pressgutaufgabetisch zum Einfüllraum und zur Förderschwinge hin sperrt und bei unter dem Pressgutaufgabetisch befindlicher Förderschwinge den Pressgutaufgabetisch zum Einfüllraum hin freigibt. Mittels des verschwenkbaren Bodenteils wird mit einer besonders hohen Sicherheit gewährleistet, dass eine Bedienungsperson nicht in einen gefährlichen Kontakt mit der Förderschwinge kommen kann, selbst wenn die Förderschwinge einen großen, über die Höhe des Pressgutaufgabetisches hinausgehenden Schwenkwinkel aufweist. Zugleich verhindert der verschwenkbare Bodenteil ein Einschieben von Pressgut in dem Moment, in dem sich die Förderschwinge gerade vor dem Pressgutaufgabetisch befindet, so dass eine Gefährdung des Bedienungspersonals durch plötzliches Bewegen, insbesondere Hochschlagen, des Pressguts durch dessen Kontakt mit der sich bewegenden Förderschwinge vermieden wird.

Um dabei die mechanische Konstruktion möglichst einfach zu halten, ist weiter vorgesehen, dass der verschwenkbare Bodenteil innerhalb seines Schwenkbereichs von der Förderschwinge mitnehmbar ist. Eigene aktive Antriebsmittel für das Verschwenken des Bodenteils werden so vorteilhaft nicht benötigt. Es genügt, den Bodenteil innerhalb eines ausreichenden Schwenkwinkels relativ zum übrigen Boden verschwenkbar zu lagern. Das Bewegen des Bodenteils übernimmt die Förderschwinge, vorzugsweise über entsprechend angeordnete Mitnehmer.

Als Alternative zu dem vorstehend beschriebenen verschwenkbaren Bodenteil schlägt die Erfindung vor, dass der Pressgutaufgabetisch in Richtung zum Einfüllraum eine Tischverlängerung aufweist, die um eine entlang einer Aufgabetischvorderkante verlaufende Schwenkachse verschwenkbar ist. Wenn die Förderschwinge sich in einer von dem Pressgutaufgabetische entfernten Position befindet, verläuft die Tischverlängerung zweckmäßig als Verlängerung des Pressgutaufgabetisches weiter in Richtung zum Einfüllraum. Wenn sich die Förderschwinge dem Pressgutaufgabetisch nähert, wird die Tischverlängerung nach oben verschwenkt, um Bedienungspersonal vor der Förderschwinge zu schützen.

Zwecks einfacher Betätigung der verschwenkbaren Tischverlängerung ist bevorzugt vorgesehen, dass durch die Förderschwinge bei deren Schwenkbewegung im Bereich ihres hinteren Umkehrpunktes die Tischverlängerung durch Kontakt mit der Förderschwinge oder mit dem Förderkopf mit verschwenkbar ist.

Weiter schlägt die Erfindung vor, dass die Tischverlängerung eine parallel zu ihrer Schwenkachse gemessene Breite hat, die kleiner ist als der in gleicher Richtung gemessene Abstand zwischen den Schwingenarmen der Förderschwinge und dass die Tischverlängerung in einem unteren Bereich ihrer Verschwenkung mit ihrer freien Seite zwischen die Schwingenarme ragt und auf dem Förderkopf aufliegt. In dieser Ausführung wirkt die freie Seite der Tischverlängerung vorteilhaft als Schieber, der beim Zurückschwenken der Förderschwinge auf der Oberseite des Förderkopfes befindliches Pressgut nach vorne schiebt und so vor die Vorderseite des Förderkopfes befördert. Auf diese Weise kann die Höhe der hinteren Kante des Einfüllraums reduziert werden, was das manuelle Einbringen von Pressgut erleichtert.

Eine weitere Funktion erhält die Tischverlängerung in einer Ausgestaltung, bei der vorgesehen ist, dass die Tischverlängerung unterseitig einen Bogen beschreibt oder einen relativ zur übrigen Tischverlängerung verschwenkbaren Bogenteil aufweist und dass bei nach oben verschwenkter Tischverlängerung diese oder deren Bogenteil den in Form eines Zylindermantelabschnitts gebogenen Boden an seinem von dem Übergabebereich entfernten Ende in einen gleichsinnig stärker und über die Vertikale hinaus gebogenen Pressgutrückführbogen fortsetzt. Hiermit wird der Transport von Pressgut über Kopf von der Rückseite zur Vorderseite der Förderschwinge unterstützt, wenn die Förderschwinge sich in den Bereich des von dem Übergabebereich entfernten Umkehrpunktes ihrer Schwenkbewegung bewegt.

Die Förderschwinge kann unterschiedlich angetrieben werden. In einer bevorzugten Ausgestaltung ist als Kraftantrieb der Förderschwinge ein linear oszillierender Kraftantrieb vorgesehen, wobei ein bewegliches Ende des Kraftantriebes, insbesondere eine Kolbenstange einer Kolben-Zylinder-Einheit, unmittelbar oder über einen Übersetzungswinkelhebel mit einem Schwenkhebel der Förderschwinge gelenkig verbunden ist. Die Kolben-Zylinder-Einheit kann einen oder mehrere Pneumatik- oder Hydraulikzylinder umfassen, die an einem Ende beispielsweise am Kasten des Einfüllraums gelagert sind und deren anderes Ende mit dem erwähnten Schwenkhebel oder Übersetzungswinkelhebel der Förderschwinge zu deren Verschwenkung verbunden ist.

Wie oben erwähnt, hat die erfindungsgemäße Förder- und/oder Presseinrichtung eine oder zwei Rotorwalzen. Diese kann/können mit einem Kraftantrieb, insbesondere Elektro- oder Hydraulikmotor, gedreht werden, um das von der Förderschwinge zugeführte Pressgut aus dem Übergabebereich in den Behälterinnenraum eines zugehörigen Sammelbehälters oder in die Presskammer einer zugehörigen Presse zu fördern. Dabei erfolgt durch die Zuführeinrichtung bereits ein erstes Vorpressen des Pressguts und nachfolgend kann das Pressgut durch die Rotorwalze oder Rotorwalzen weiter verdichtet und/oder zerkleinert werden. Vorzugsweise ist der/jeder Rotorwalze ein Abstreifer zugeordnet, der schwenkbeweglich gelagert sein kann und der mit seinen Zinken Pressgut von den Zähnen der Rotorwalze in den Behälterinnenraum oder in die Presskammer abstreift.

Um den Übergang des Pressguts vom Übergabebereich in den Wirkungsbereich der Rotorwalze oder Rotorwalzen zu verbessern, wird vorgeschlagen, dass am dem Übergabebereich zugewandten Ende des Bodens eine parallel zu der Rotorwalze oder zu den beiden parallelen Rotorwalzen verlaufende Förderrolle angeordnet ist. Ein Drehantrieb der Förderrolle ist zweckmäßig mit dem Drehantrieb der Rotorwalze oder Rotorwalzen gekoppelt. Die Drehrichtung der Förderrolle ist so, dass mit der Förderrolle in Kontakt tretendes Pressgut in Richtung zur einzigen Rotorwalze bzw. zur nächstliegenden der zwei Rotorwalzen gefördert wird. Wenn nur eine Rotorwalze vorhanden ist, wirkt diese in an sich bekannter Weise mit einer Gleit- und Führungsplatte zusammen, wobei zwischen dem Außenumfang der Rotorwalze und der dieser zugewandten Oberfläche der Gleit- und Führungsplatte die Förderung des Pressguts erfolgt. Wenn zwei parallele Rotorwalzen vorhanden sind, erfolgt das Fördern des Pressguts zwischen den sich gegensinnig drehenden Walzen hindurch.

Eine weitere Ausgestaltung der Förder- und/oder Presseinrichtung ist dadurch gekennzeichnet, dass die Zuführeinrichtung eine gesonderte Einheit bildet, die über lösbare Verbindungsmittel mit der übrigen Förder- und/oder Presseinrichtung oder mit einer Ballenpresse oder einem Sammelbehälter verbindbar und davon trennbar ist. Auch können die Zuführeinrichtung und die Förder- und/oder Presseinrichtung zusammen eine Baueinheit bilden. Die Zuführeinrichtung allein oder zusammen mit der Förder- und/oder Presseinrichtung kann dann ortsfest dort angeordnet sein und bleiben, wo zu pressendes und zu sammelndes Pressgut anfällt, während ein Sammelbehälter für sich austauschbar und abtransportierbar ist. Dabei kann der Sammelbehälter in an sich bekannter Art beispielsweise als Absetzcontainer ausgeführt sein, der von einem Lastkraftwagen aufgenommen, transportiert, durch Kippen entleert und abgesetzt werden kann. Die Förder- und/oder Presseinrichtung steht so durchgehend zur Verfügung und muss nicht zusammen mit dem Behälter transportiert werden. Der Förder- und/oder Presseinrichtung kann auch eine an sich bekannte Ballenpresse nachgeordnet sein.

Alternativ kann die Zuführeinrichtung zusammen mit der Förder- und/oder Presseinrichtung integriert mit einer Ballenpresse oder einem Sammelbehälter ausgeführt und fest mit dieser/diesem verbunden sein.

Im Folgenden werden Ausführungsbeispiele der Erfindung anhand einer Zeichnung erläutert. Die Figuren der Zeichnung zeigen:
- Figur 1: eine Förder- und/oder Presseinrichtung mit einer vorgeschalteten Zuführeinrichtung, mit einer Förderschwinge in einer ersten Position, in einem vertikalen Schnitt,
- Figur 2: die Zuführeinrichtung aus Figur 1 mit der Förderschwinge in einer zweiten Position, in einem vertikalen Schnitt,
- Figur 3: eine weitere Ausgestaltung der Zuführeinrichtung, in einem vertikalen Schnitt,
- Figur 4: einen Sammelbehälter und eine Presseinrichtung und Zuführeinrichtung, vor deren Verbinden miteinander, in perspektivischer Ansicht,
- Figur 5: die Förder- und/oder Presseinrichtung mit vorgeschalteter Zuführeinrichtung in einer geänderten Ausführung, in perspektivischer Ansicht schräg von oben,
- Figur 5a: die Förder- und/oder Presseinrichtung mit vorgeschalteter Zuführeinrichtung aus Figur 5, mit einer Förderschwinge in einer ersten Position, in einem vertikalen Schnitt,
- Figur 5b: die Förder- und/oder Presseinrichtung mit vorgeschalteter Zuführeinrichtung aus Figur 5, mit der Förderschwinge in einer zweiten Position, in einem vertikalen Schnitt,
- Figur 6: die Zuführeinrichtung in einer weiteren Ausführung, in Ansicht schräg von oben,
- Figur 7: die Zuführeinrichtung aus Figur 6, zusammen mit einer Fördereinrichtung, in einem vertikalen Schnitt,
- Figur 8: eine Zuführeinrichtung mit Fördereinrichtung und einer dieser nachgeschalteten, angedeuteten Ballenpresse, in einem vertikalen Schnitt,
- Figur 9: den in Figur 8 eingerahmten Ausschnitt in vergrößerter Darstellung,
- Figur 10: die Zuführeinrichtung mit Fördereinrichtung und angedeuteter Ballenpresse, in Ansicht schräg von oben,
- Figur 11: die Zuführeinrichtung in einer weiteren Ausführung, in perspektivischer Ansicht schräg von oben, in teilweise aufgebrochener Darstellung,
- Figur 12: einen Ausschnitt der Zuführeinrichtung aus Figur 11, in einem vertikalen Schnitt,
- Figur 13: einen weiteren Ausschnitt der Zuführeinrichtung, in einem vertikalen Schnitt, zusammen mit einem vergrößerten Detail, in einer ersten Betriebsstellung,
- Figur 14: den Ausschnitt der Zuführeinrichtung aus Figur 13, zusammen mit einem vergrößerten Detail, in einer zweiten Betriebsstellung,
- Figur 15: die Zuführeinrichtung in einer weiteren Ausführung, zusammen mit einer Fördereinrichtung, in einem vertikalen Schnitt, in einer ersten Betriebsstellung, und
- Figur 16: die Zuführeinrichtung aus Figur 15 in gleicher Darstellung, in einer zweiten Betriebsstellung.

In den Figuren der Zeichnung sind gleiche Teile jeweils mit den gleichen Bezugsziffern versehen, so dass nicht jede Bezugsziffer in jeder Zeichnungsfigur eigens erläutert wird.

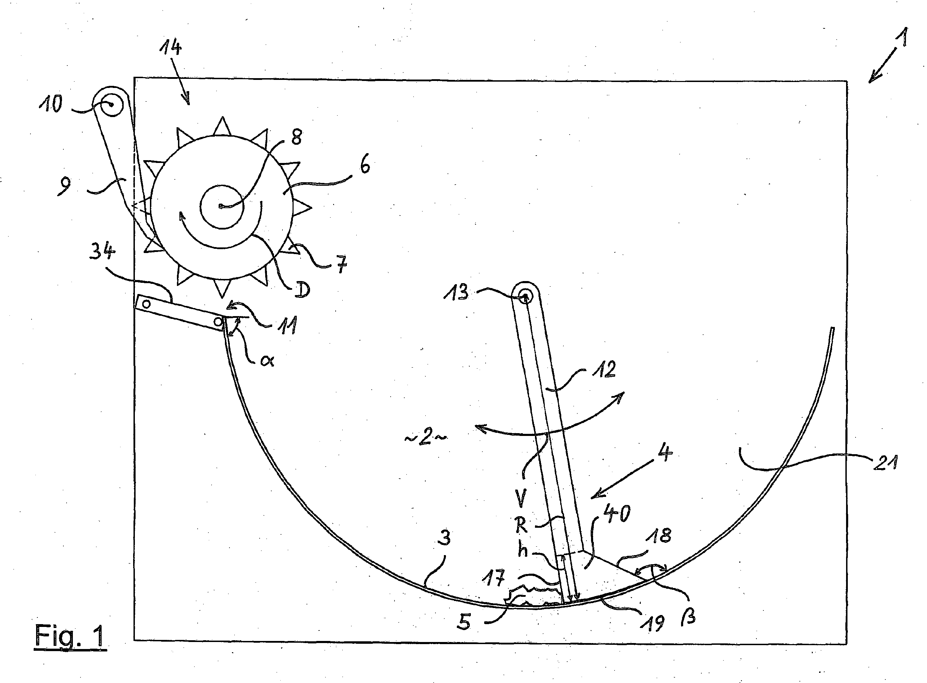

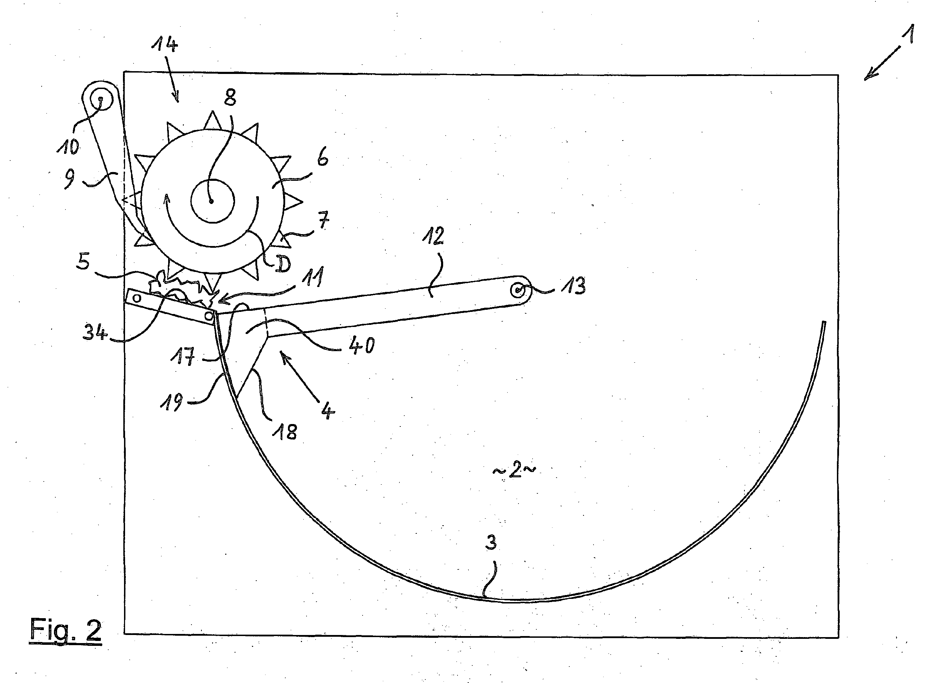

Die Figuren 1 und 2 der Zeichnung zeigen im Querschnitt eine Förder- und/oder Presseinrichtung 14 eines Sammelbehälters, insbesondere eines Abfallbehälters, oder einer Ballenpresse, wobei der Sammelbehälter oder die Ballenpresse hier nicht eigens dargestellt sind. Der Förder- und/oder Presseinrichtung 14 ist eine Zuführeinrichtung 1 vorgeschaltet, die in den Figuren 1 und 2 in zwei verschiedenen Betriebszuständen dargestellt ist. Ein Einfüllraum 2 ist durch Seitenwände 21, von denen hier nur eine im Hintergrund sichtbar ist, und einen Boden 3 gebildet. Oberseitig ist der Einfüllraum 2 offen oder mit einer aufstellbaren Klappe versehen, um Pressgut 5, wie leere Kunststoffflaschen oder Kartonagen, einfüllen zu können.

Der Boden 3 ist entsprechend einem Zylindermantel gekrümmt, wobei die gedachte Mittelachse des Zylinders mit einer Schwenkachse 13 einer Förderschwinge 4 zusammenfällt. Dabei erstreckt sich der Boden 3 über etwa einen Halbkreis, der nach oben offen ist. Somit bewegt sich die Förderschwinge 4 immer parallel entlang des Bodens 3. Die Förderschwinge 4 wird vorzugsweise von einem hier nicht sichtbaren Kraftantrieb, wie Hydraulikzylinder oder Elektromotor, hin und her verschwenkt, wie durch den Doppelpfeil V verdeutlicht. Die Förderschwinge 4 verfügt über einen Förderkopf 40 und zwei Schwingenarme 12, die hier parallel zu den beiden Seitenwänden 21 dicht vor diesen verlaufen. Mit der Förderschwinge 4 und deren Förderkopf 40 wird das Pressgut 5 aus einer Lage im unteren Bereich des Bodens 3, wie in Figur 1 dargestellt, einem Pressgutübergabebereich 11 zugeführt, wie aus Figur 2 ersichtlich ist. Die Schwingenarme 12 sind selbst an der Förderung des Pressguts 5 nicht beteiligt, sondern tragen nur den Förderkopf 40.

Im Pressgutübergabebereich 11 wird das Pressgut 5 von den, vorzugsweise austauschbaren, Zähnen 7 einer Rotorwalze 6, die eine Arbeitsdrehrichtung D hat und die einen Teil der zugehörigen Förder- und/oder Presseinrichtung 14 bildet, ergriffen und ggf. zerkleinert und/oder weiter verdichtet und über eine Gleit- und Führungsplatte 34 dem eigentlichen Behälterinnenraum des nachgeordneten Sammelbehälters oder der Presskammer der nachgeordneten Ballenpresse zugeführt. Die Rotorwalze 6 wird ebenfalls mittels eines Kraftantriebs, wie Elektro- oder Hydraulikmotor, um ihre Drehachse 8 gedreht. Die Drehrichtung kann beispielsweise zu Reinigungs- und Wartungszwecken umschaltbar sein.

Der Rotorwalze 6 ist ein Abstreifer 9 zugeordnet, um mit dessen Zinken eventuell an den Zähnen 7 hängendes Pressgut 5 in den Sammelbehälterinnenraum oder in die Presskammer abzustreifen. Dabei kann der Abstreifer 9 um eine Schwenkachse 10 verschwenkbar gelagert und mit einem Schwenkantrieb versehen sein, um das Pressgut 5 bei stillstehender Rotorwalze 6 weiter in den nachgeordneten Behälterinnenraum oder in die nachgeordnete Presskammer zu fördern und zu verdichten.

Der Förderkopf 40 der Förderschwinge 4 besitzt eine der Rotorwalze 6 zugewandte Vorderseite 17, die rechtwinklig oder annähernd rechtwinklig, das heißt unter einem Winkel von 90° ±20°, zum Boden 3 verläuft, und eine von der Rotorwalze 6 abgewandte Rückseite 18, die unter einem flachen, stumpfen Winkel β zum Boden 3 verläuft. In Radialrichtung der Förderschwinge 4 gesehen hat der Förderkopf 40 vom Boden 3 ausgehend eine Höhe h, die sich über maximal 25%, vorzugsweise über 10 bis 20%, des Radius R der Förderschwinge 4 erstreckt; im gezeigten Ausführungsbeispiel beträgt der Wert etwa 15%. Der Radius R der Förderschwinge 4 ist gemessen von deren Schwenkachse 13 bis zu der dem Boden 3 zugewandten Unterseite 19 des Förderkopfes 40.

Radial innen vom Förderkopf 40 ist der Raum zwischen den Schwingenarmen 12 frei. Die senkrecht zur Zeichnungsebene der Figuren 1 und 2 gemessene Länge des Förderkopfes 40 entspricht zweckmäßig der in derselben Richtung gemessenen Länge der Rotorwalze 6.

Wenn sich die Förderschwinge 4 in ihrer in Figur 2 gezeigten vorderen Endposition befindet, bildet die Vorderseite 17 des Förderkopfes 40 eine Vergrößerung des Übergabebereichs 11 und grenzt diesen zugleich nach unten hin ab. Im Übergabebereich 11 kann nun das Pressgut 5 von der Rotorwalze 6 wirksam erfasst werden. Überschüssiges Pressgut fällt über den Förderkopf 40 hinweg zwischen den Schwingenarmen 12 hindurch zurück in den tiefsten Bereich des Einfüllraums 2.

Bewegt sich die Förderschwinge 4 entgegen der Förderrichtung aus der Position im Übergabebereich 11 nahe der Rotorwalze 6 wie in Figur 2 wieder in eine zurückgeschwenkte Position wie in Figur 1, so rutscht und gleitet eventuell noch im Übergabebereich 11 vorhandenes, noch nicht von der Rotorwalze 6 erfasstes Pressgut 5 aufgrund der Schwerkraft selbsttätig wieder zurück zum tiefsten Punkt des zylindermantelförmigen Bodens 3 des Einfüllraums 2. Dadurch, dass der Boden 3 zu dem Übergabebereich 11 hin ansteigt, wird vermieden, dass der Förder- und/oder Presseinrichtung 14, hier konkret der Rotorwalze 6, eine zu große Menge an Pressgut 5 zugeführt wird. Ein Verstopfen oder eine Überlastung ist somit wirkungsvoll unterbunden. Da der Boden 3 hier annähernd einen Halbkreis beschreibt, kann der maximale Schwenkwinkel der Förderschwinge 4 hier bis zu annähernd 180° betragen. Je nach Konstruktion von Boden 3 und Förderschwinge 4 im Detail und abhängig vom zu verarbeitenden Pressgut kann der Schwenkwinkel auch kleiner als 100° sein. Bevorzugt beträgt der Winkel, über den die Förderschwinge 4 verschwenkbar ist, zwischen 60° und 180°, besonders bevorzugt zwischen 90° und 150°.

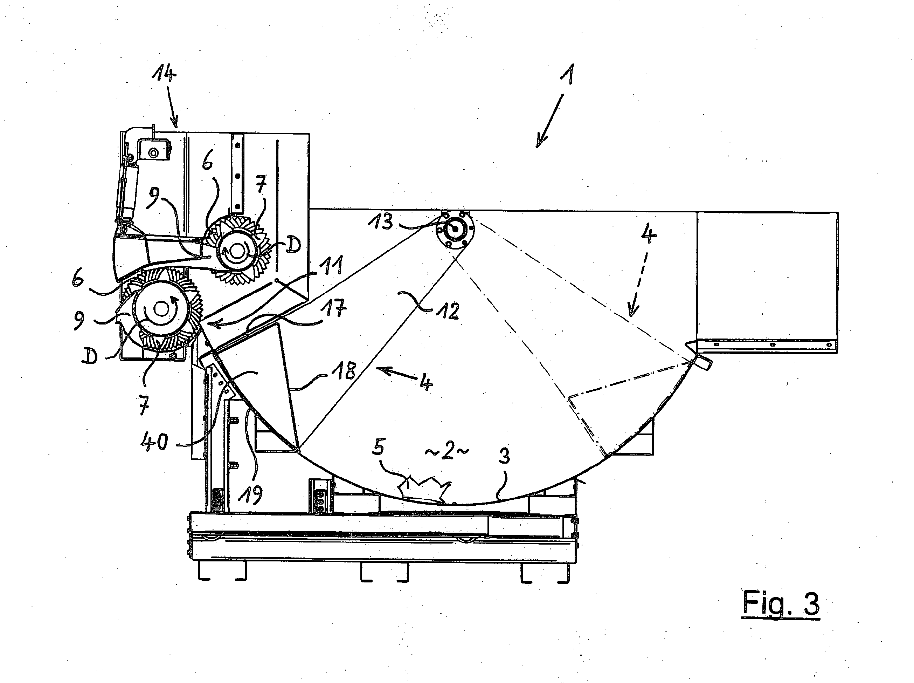

In Figur 3 ist eine weitere Ausgestaltung dargestellt, wobei hier die Förder- und/oder Presseinrichtung 14 zwei gegenläufig, vorzugsweise von einem gemeinsamen Kraftantrieb, angetriebene Rotorwalzen 6 mit jeweils der durch einen Pfeil dargestellten Arbeitsdrehrichtung D umfasst. Dadurch wird die Förder- und Pressleistung erhöht, da das Pressgut 5 zwischen den beiden Rotorwalzen 6, denen jeweils ein Abstreifer 9 zugeordnet ist, in den Behälterinnenraum des nachgeordneten, hier nicht gezeigten Sammelbehälters oder in die Presskammer der nachgeordneten Ballenpresse gefördert wird.

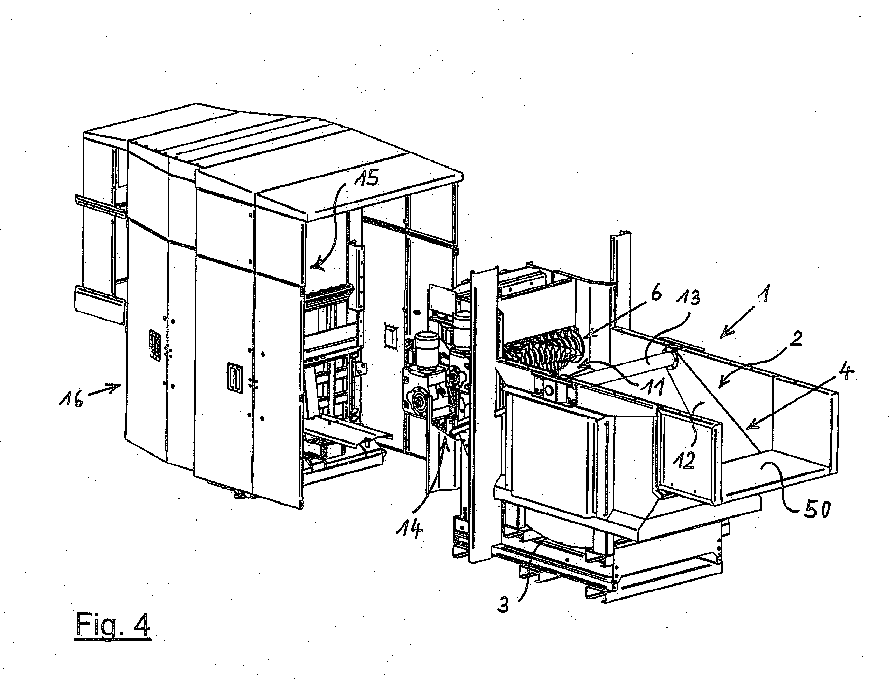

Aus der Figur 4 ist eine Zuführeinrichtung 1 zusammen mit einer Förder- und/oder Presseinrichtung 14 und einem Sammelbehälter 16 insgesamt ersichtlich. Der Sammelbehälter 16 besteht beispielsweise aus metallischen Wandelementen, um den eigentlichen Behälterinnenraum 15 für das Pressgut 5 zu bilden. Davon lösbar ist die Förder- und/oder Presseinrichtung 14 mit der mindestens einen Rotorwalze 6. Zum Zuführen des Pressguts 5 zur Förder- und/oder Presseinrichtung 14 dient die Zuführeinrichtung 1 mit der in dem Einfüllraum 2 verschwenkbaren Förderschwinge 4, wie oben schon beschrieben. An der von der Förder- und/oder Presseinrichtung 14 abgewandten Seite der Zuführeinrichtung 1 ist ein Pressgutaufgabetisch 50 angeordnet, auf den eine Bedienungsperson Pressgut auflegen und dann in das Innere des Einfüllraums 2 einschieben kann.

In Figur 4 sind die Zuführeinrichtung 1 einerseits und der Sammelbehälter 16 andererseits noch nicht miteinander verbunden. Im verbundenen Zustand liegt die Förder- und/oder Presseinrichtung 14 unmittelbar vor oder in der Öffnung des Behälterinnenraums 15 des Sammelbehälters 16. Der Sammelbehälter 16 kann ein für sich transportabler Container sein, der mit einem Transportfahrzeug zu seiner Entleerung einer Verwertungsanlage oder Deponie zugeführt und dann wieder zurücktransportiert und erneut mit der Zuführeinrichtung 1 und der Förder- und/oder Presseinrichtung 14 verbunden werden kann.

Der den Einfüllraum 2 bildende Kasten ist entweder fest mit der Förder- und/oder Presseinrichtung 14 verbunden oder von dieser lösbar ausgebildet, um ihn abnehmen und mit einer anderen Förder- und/oder Presseinrichtung einsetzen zu können. Auch können die Förder- und/oder Presseinrichtung 14 und der Einfüllraum 2 mit Förderschwinge 4 ihrerseits eine gemeinsame Einheit bilden, die mit dem Sammelbehälter 16 fest oder lösbar verbunden ist.

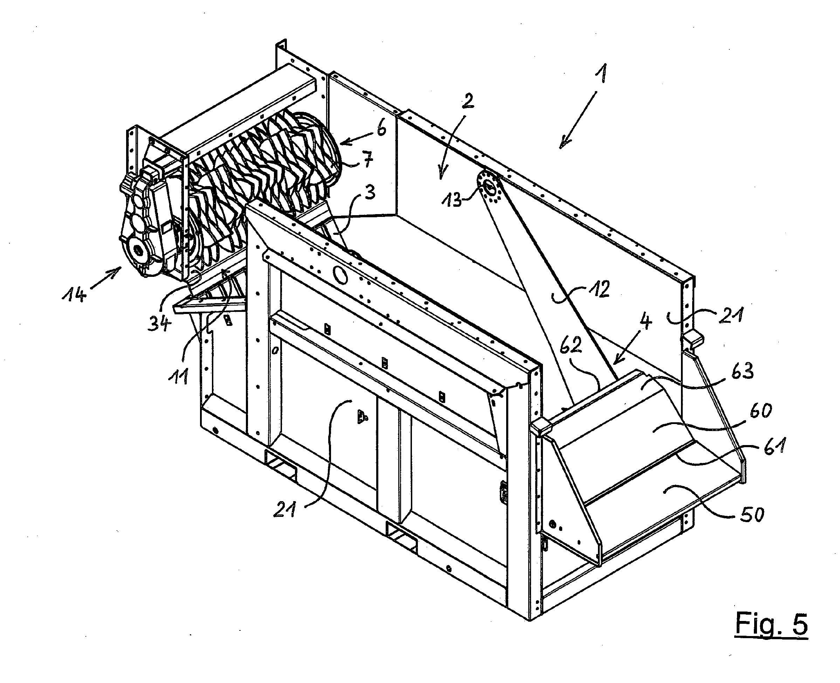

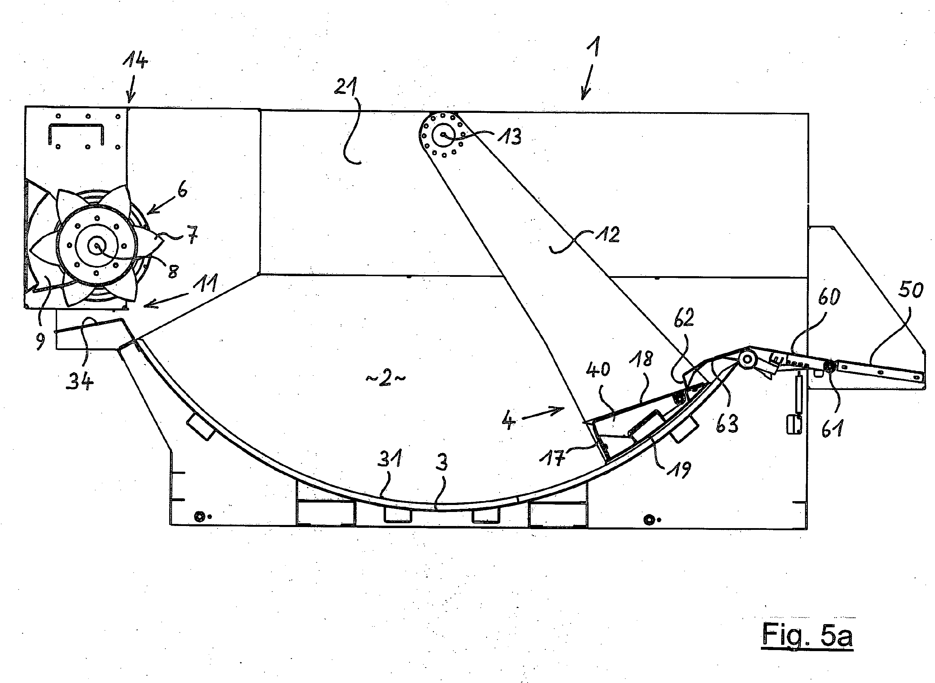

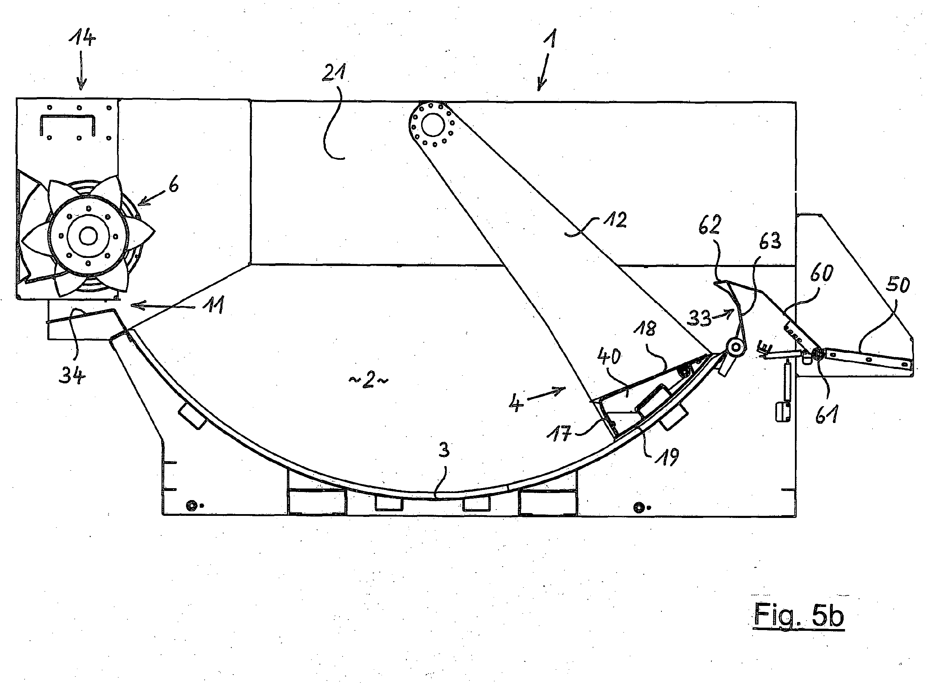

Die Figur 5 zeigt in einer Ansicht schräg von oben ein weiteres Ausführungsbeispiel einer Zuführeinrichtung 1 zusammen mit einer Förder- und/oder Presseinrichtung 14. Die Zuführeinrichtung 1 besitzt auch hier einen Einfüllraum 2, der durch zwei Seitenwände 21 und einen hier weitestgehend verdeckten, in Form eines Zylindermantelabschnitts gebogenen Boden 3 gebildet ist. An der in Figur 5 links liegende Seite der Zuführeinrichtung 1 ist die Förder- und/oder Presseinrichtung 14 mit dem davor liegenden Übergabebereich 11 angeordnet. Die Förder- und/oder Presseinrichtung 14 ist hier durch eine drehantreibbare Rotorwalze 6 mit einer Vielzahl von radial vorstehenden Zähnen 7 gebildet. Unterhalb der Rotorwalze 6 liegt die Gleit- und Führungsplatte 34.

Im Einfüllraum 2 ist die Förderschwinge 4 um die horizontal verlaufende Schwenkachse 13 verschwenkbar angeordnet, wobei von der Förderschwinge 4 hier nur einer von deren Schwingenarmen 12 sichtbar ist. Ein zugehöriger Schwenkantrieb der Förderschwinge 4 ist in Figur 5 nicht dargestellt.

An dem in Figur 5 rechten Ende der Zuführeinrichtung 1 ist ein Pressgutaufgabetisch 50 angeordnet, der sich über die gesamte Breite der Stirnseite der Zuführeinrichtung 1 erstreckt und im Wesentlichen horizontal ausgerichtet ist. In Richtung zum Einfüllraum 2 hin schließt sich an den Aufgabetisch 50 eine Tischverlängerung 60 an, die ebenfalls plattenförmig ist und die mit dem Pressgutaufgabetisch 50 um eine Schwenkachse 61 verschwenkbar verbunden ist. An der zum Einfüllraum 2 weisenden Seite geht die Tischverlängerung 60 in einen Bogenteil 63 über, der wiederum gelenkig mit der übrigen Tischverlängerung 60 verbunden ist. Mit einer freien Seite 62 ragt die Tischverlängerung 60 in den Einfüllraum 2 vor und zwischen die Schwingenarme 12 der Förderschwinge 4. Das Verschwenken der Tischverlängerung 60 erfolgt durch die Förderschwinge 4, wenn diese sich im Bereich ihres hinteren Umkehrpunktes befindet, wie in Figur 5 gezeigt.

Die Figuren 5a und 5b zeigen die Zuführeinrichtung 1 aus Figur 5 im vertikalen Schnitt in zwei verschiedenen Betriebsstellungen.

In Figur 5a nähert sich die Förderschwinge 4 mit ihrem Förderkopf 40 dem hinteren Umkehrpunkt ihrer Schwenkbewegung, hat diesen aber noch nicht erreicht. In dieser Betriebsstellung ragt die freie Seite 62 des Bogenteils 63 der Tischverlängerung 60 zwischen die Schwingenarme 12 der Förderschwinge 4 und liegt auf der hier nach oben weisenden Rückseite 18 des Förderkopfes 40 auf. Bei weiterer Bewegung der Förderschwinge 4 in Richtung zum hinteren Umkehrpunkt, also in Figur 5 entgegen dem Uhrzeigersinn, bewegt sich der Förderkopf 40 noch weiter in Richtung zur Tischverlängerung 60, wodurch deren freie Seite 62 sich relativ zum Förderkopf 40 weiter über dessen Rückseite 18 in Richtung zur Vorderseite 17 des Förderkopfes 40 bewegt. Hierdurch wirkt die freie Seite 62 der Tischverlängerung 60 wie ein Schieber, der Pressgut über den Förderkopf 40 hinweg zu dessen Vorderseite 17 schiebt.

In Figur 5b hat die Förderschwinge 4 praktisch ihren hinteren Umkehrpunkt erreicht. In dieser Betriebsstellung drückt der Förderkopf 40 mittels einer mechanischen Kopplung die verschwenkbare Tischverlängerung 60 mit dem dazu wiederum verschwenkbaren Bodenteil 63 nach oben. Hierdurch kommt der mit dem Pressgutaufgabetisch 50 verbundene Teil der Tischverlängerung 60 in eine schräg nach oben verlaufende Stellung, in der ein weiteres Einschieben von Pressgut vom Pressgutaufgabetisch 50 aus in den Einfüllraum 2 nicht mehr möglich ist. Gleichzeitig ist nun der zunächst unter der Tischverlängerung 60 liegende Bogenteil 63 in eine annähernd vertikale Richtung verstellt, so dass nun die freie Seite 62 der Tischverlängerung 60 nach oben weist. Die zum Einfüllraum 2 weisende Seite des Bogenteils 63 bildet nun einen gleichsinnig wie der Boden 3, jedoch stärker und über die Vertikale hinaus gebogenen Pressgutrückführbogen 33. Von dem Förderkopf 40 in Richtung zu diesem Pressgutrückführbogen 33 geschobenes Pressgut wird hier in Richtung zum Einfüllraum 2 umgelenkt und fällt dann unter der Wirkung der Schwerkraft über den Förderkopf 40 hinweg in den tiefsten Bereich des Einfüllraums 2. Von dort kann das Pressgut dann bei Verschwenkung der Förderschwinge 4 in deren Förderrichtung, das heißt hier im Uhrzeigersinn, mittels der Vorderseite 17 des Förderkopfes 40 zum Übergabebereich 11 zu der Förder- und/oder Presseinrichtung 14 transportiert werden.

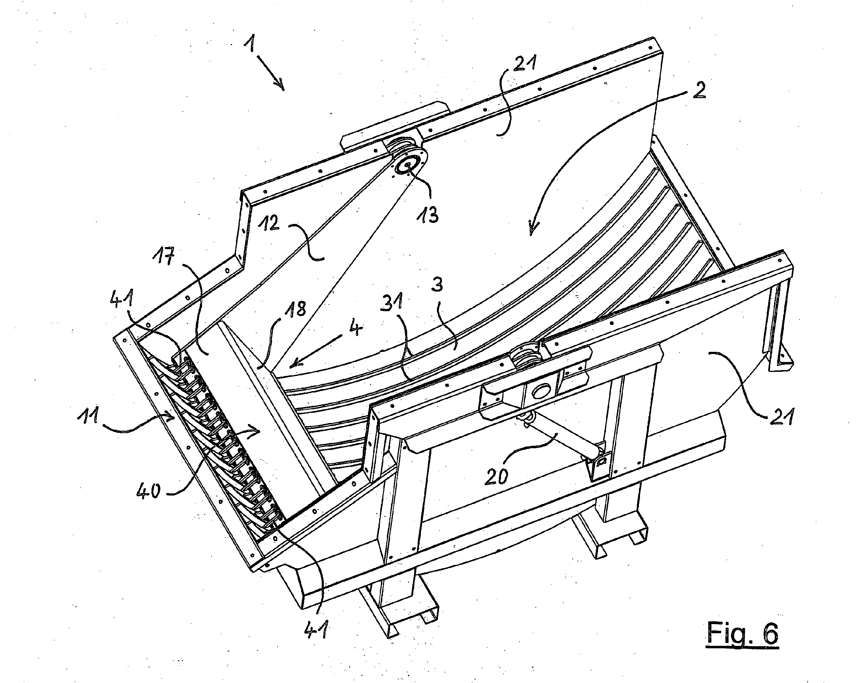

Die Figur 6 der Zeichnung zeigt die Zuführeinrichtung 1 in einer weiteren Ausführung, in Ansicht schräg von oben, so dass der Blick des Betrachters in das Innere des Einfüllraums 2 und auf dessen Boden 3 fällt. Die Zuführeinrichtung 1 besitzt auch hier den Einfüllraum 2 mit den Seitenwänden 21 und dem Boden 3. Im Einfüllraum 2 ist wieder die Förderschwinge 4 um ihre Schwenkachse 13 hin und her verschwenkbar. Der Boden 3 ist wieder in Form eines Zylindermantelabschnitts gebogen, wobei die Mittelachse des gedachten Zylinders durch die Schwenkachse 13 der Förderschwinge 4 verläuft. Die Förderschwinge 4 besteht auch hier wieder aus dem Förderkopf 40 und den zwei seitlichen Schwingenarmen 12, deren oberes Ende jeweils in der Schwenkachse 13 an den Seitenwänden 21 gelagert ist. Ebenfalls übereinstimmend mit den vorherigen Ausführungsbeispielen besitzt der Förderkopf 40 eine im Wesentlichen rechtwinklig zum Boden 3 ausgerichtete Vorderseite 17 und eine unter einem flachen stumpfen Winkel zum Boden 3 ausgerichtete Rückseite 18. Der Raum radial innen vom Förderkopf 40 zwischen den Schwingenarmen 12 ist auch hier frei, um einen Durchgang von Pressgut zu erlauben. Zum Antreiben der Förderschwinge 4 dient ein Kraftantrieb 20, der an der Außenseite der dem Betrachter zugewandte Seitenwand 21 angeordnet ist und hier durch einen Hydraulikzylinder gebildet ist. Zwecks symmetrischer Krafteinleitung kann auch an der vom Betrachter abgewandten Seitenwand 21 des Einfüllraums 2 ein identischer Kraftantrieb 20 angeordnet sein.

Auf dem Boden 3 sind parallel zueinander verlaufende Rippen 31 angeordnet oder angeformt, die parallel zur Schwenkrichtung oder Bewegungsrichtung der Förderschwinge 4 verlaufen. Weiterhin sind an der Vorderseite 17 des Förderkopfes 4 Förderzinken 41 angeordnet, deren freies Ende sich jeweils zwischen die Rippen 31 erstreckt. Die Förderzinken 41 sind hier derart gelenkig mit dem Förderkopf 40 verbunden, dass beim Zurückbewegen des Förderkopfes 40 diese Förderzinken 41 von auf dem Boden 3 liegendem flachem Pressgut nach vorne und oben geschwenkt werden und so das Pressgut darunter passieren lassen. Beim Vorwärtsbewegen des Förderkopfes 40 werden diese Zinken 41, wenn sie gegen das Pressgut treffen, nach unten und hinten gegen die Vorderseite 17 des Förderkopfes 40 in eine im Wesentlichen radiale Ausrichtung geschwenkt und schieben dann zuverlässig das erfasste Pressgut vor sich her in den Übergabebereich 11 und so der hier nicht dargestellten Förder- und/oder Presseinrichtung zu. Die Förderzinken 41 können dabei mit einer Kraft, wie Federkraft, vorbelastet sein, welche die Ausrichtung der Förderzinken 41 in Radialrichtung unterstützt.

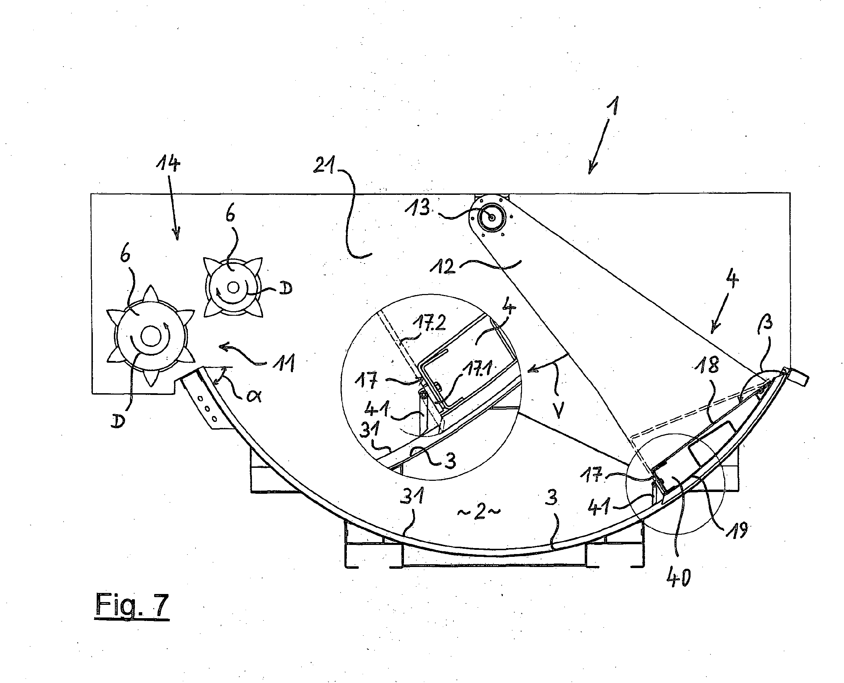

Figur 7 zeigt die Zuführeinrichtung 1 aus Figur 6 im vertikalen Schnitt. Hier wird besonders die zylindermantelförmige Biegung des Bodens 3 erkennbar, über dessen Oberseite die Förderschwinge 4 um ihre Schwenkachse 13 mittels der Schwingenarme 12 hin und her verschwenkbar ist. Auf dem Boden 3 sind die parallel zur Schwenkrichtung bzw. Bewegungsrichtung der Förderschwinge 4 verlaufenden Rippen 31 angeordnet, von denen im Schnitt nach Figur 7 nur eine sichtbar ist. In seinem unmittelbar vor zwei Rotorwalzen 6 liegenden Endbereich steigt der Boden 3 in Förderrichtung gesehen unter dem Winkel α zur Horizontalen an, um auch hier zu gewährleisten, dass von den Rotorwalzen 6 noch nicht erfasstes Pressgut bei einer Rückbewegung der Förderschwinge 4 aus dem Übergabebereich 11 wieder in den tiefsten Bereich des Einfüllraums 2 zurück fällt oder zurück rutscht.

Wie die Figur 7 weiter verdeutlicht, ist der Förderkopf 40 ein in Querschnitt gesehen etwa dreieckiger Hohlkörper, dessen Vorderseite 17 im Wesentlichen senkrecht zum Boden 3, also in Radialrichtung der Förderschwinge 4 verläuft. Die Rückwand 18 verläuft hier unter einem sehr flachen stumpfen Winkel β zum Boden 3. Die Unterseite 19 des Förderkopfes 40 ist an die gebogene Form des Bodens 3 angepasst.

An der Vorderseite 17 des Förderkopfes 40 sind die Förderzinken 41 einzelnen gelenkig angebracht, wobei in Figur 7 im Schnitt nur einer der Förderzinken 41 erkennbar ist. Dabei ist in Figur 7 der Förderzinken 41 in seiner Lage dargestellt, die er bei der Rückbewegung der Förderschwinge 4 und beim Überlaufen eines flachen, zwischen den Rippen 31 liegenden und daher hier nicht sichtbaren Pressgutstücks einnimmt. Wird die Schwenkrichtung der Förderschwinge 4 umgekehrt, dann schwenken die Förderzinken 41 in eine im Wesentlichen radiale Ausrichtung parallel zur Vorderseite 17 des Förderkopfes 40 und ragen nun zwischen die Rippen 31. Dadurch stößt das freie Ende des Förderzinkens 41 oder mehrerer Förderzinken 41 gegen das zwischen den Rippen 31 liegende flache Pressgut und schiebt dieses dann vor sich her bis in den Übergabebereich 11 zu den Rotorwalzen 6. Auf diese Weise wird auch flaches, kleinflächiges Pressgut sicher gefördert und ein störendes Einklemmen von Pressgut zwischen Boden 3 und Förderkopf 40 wird vermieden.

In Figur 7 ist zusätzlich das rechts unten eingekreiste Detail als vergrößerter Ausschnitt dargestellt. Hieran wird ersichtlich, dass die Höhe der Vorderseite 17 des Förderkopfes 40 in Radialrichtung der Förderschwinge 4 gesehen veränderbar ist. Dazu besteht die Vorderseite 17 des Förderkopfes 40 aus zwei einander mehr oder weniger weit überlappenden und gegeneinander verstellbaren sowie fixierbaren Wandteilen 17.1 und 17.2. Hierdurch kann die Vorderseite 17 in ihrer Flächengröße an unterschiedliche zu bearbeitende Pressgüter angepasst werden.

Die Förder- und/oder Presseinrichtung 14 besteht hier aus zwei gegensinnig drehantreibbaren Rotorwalzen 6, deren Arbeitsdrehrichtung jeweils mit dem Drehpfeil D angegeben ist. Pressgut, das von dem Förderkopf 40 der Förderschwinge 4 in den Übergabebereich 11 gefördert wird, wird dort von den beiden Rotorwalzen 6 erfasst und dann zwischen den beiden Rotorwalzen 6 hindurch weiter gefördert und dabei schon vorverdichtet, um dann in einer nachgeschalteten, hier nicht dargestellten Einheit weiter verarbeitet, insbesondere gepresst, zu werden.

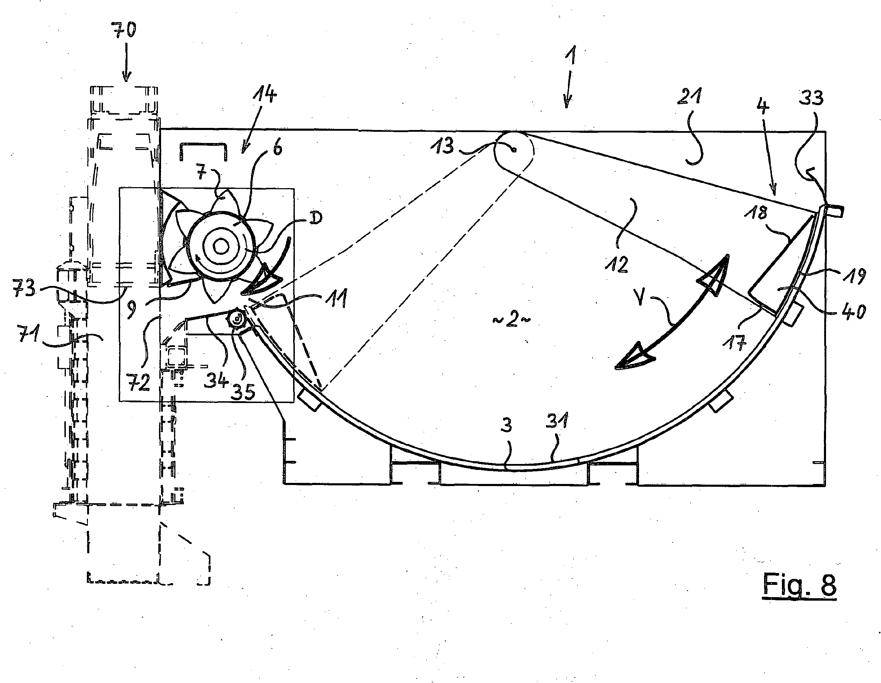

Figur 8 zeigt die Zuführeinrichtung 1 zusammen mit der Förder- und/oder Presseinrichtung 14 und einer dieser nachgeordneten, gestrichelt angedeuteten Ballenpresse 70 in einem vertikalen Schnitt. Charakteristisch für diese Ausführung ist, dass sie eine einzelne Rotorwalze 6 in der Förder- und/oder Presseinrichtung 14 und eine parallel dazu verlaufende Förderrolle 35 aufweist. Die Förderrolle 35 bildet im Übergabebereich 11 einen Übergang von dem Boden 3 zu der Gleit- und Führungsplatte 34. Die Rotorwalze 6 mit ihren Zähnen 7 besitzt die Arbeitsdrehrichtung D, die in Figur 8 im Uhrzeigersinn verläuft, während die Förderrolle 35 eine umgekehrte Drehrichtung aufweist. Die Förderrolle 35 unterstützt die Übergabe von Pressgut, welches von der Förderschwinge 4 mit deren Förderkopf 40 in den Übergabebereich 11 gefördert wird, an die Förder- und/oder Presseinrichtung, hier in Form der Rotorwalze 6, die mit der Gleit- und Führungsplatte 34 zusammenwirkt.

Als Einheit, die der Zuführeinrichtung 1 und der Förder- und/oder Presseinrichtung 14 nachgeschaltet ist, ist hier die Ballenpresse 70 angedeutet. Die Ballenpresse 70 besitzt eine Presskammer 71, in welche mittels der Förder- und/oder Presseinrichtung 14 Pressgut durch eine Beschickungsöffnung 72 einfüllbar ist. Im Inneren der Presskammer 71 ist ein Pressschild 73 mittels eines Kraftantriebes auf und ab verfahrbar, um in die Presskammer 71 eingefülltes Pressgut zu verdichten und zu einem kompakten, transportablen Pressgutballen zu formen.

Außerdem zeigt die Figur 8 an der von der Rotorwalze 6 abgewandten Seite des Bodens 3 einen fest angeordneten Pressgutrückführbogen 33, der den Boden 3 nach oben hin mit einer zunehmenden, über die Vertikalrichtung hinausgehenden Krümmung verlängert. Hierdurch wird Pressgut, welches sich bei der Verschwenkung der Förderschwinge 4 von der Rotorwalze 6 weg auf der Rückseite 18 des Förderkopfes 40 befindet, über den Förderkopf 40 hinweg gefördert und so wieder zur Vorderseite 17 des Förderkopfes 40 gebracht, um es dem Übergabebereich 11 zuführen zu können. Hinsichtlich der weiteren Einzelteile in Figur 8 wird auf die vorhergehende Beschreibung verwiesen.

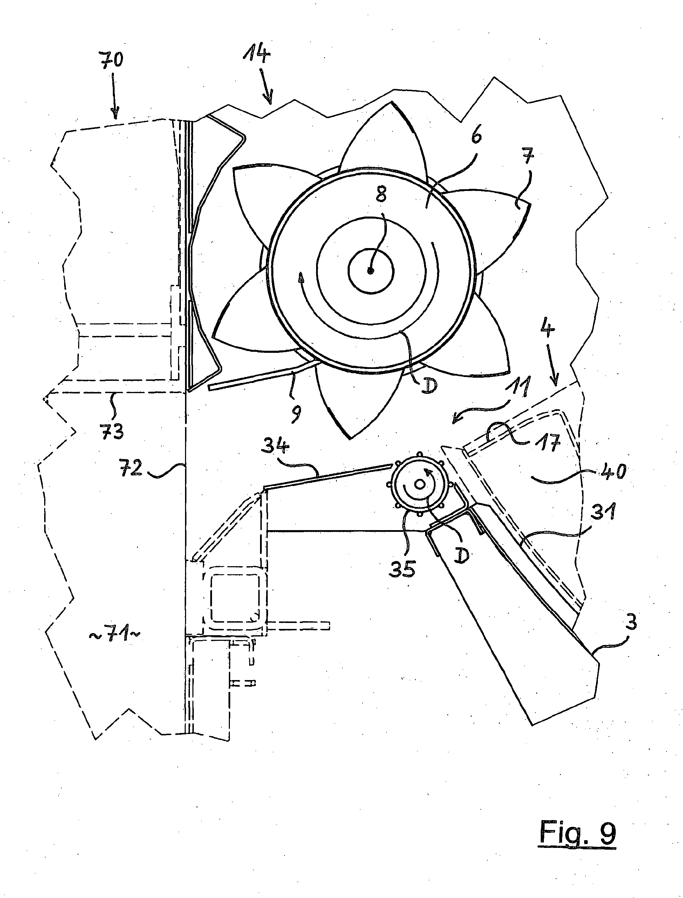

Die Figur 9 zeigt in einer vergrößerten Darstellung den in der Figur 8 eingerahmten Ausschnitt. Oben in Figur 9 liegt die Fördereinrichtung 14 mit der Rotorwalze 6, die mit den Zähnen 7 besetzt ist und die in der Arbeitsdrehrichtung D, hier im Uhrzeigersinn, um ihre Drehachse 8 antreibbar ist. Mittels des Abstreifers 9 kann an den Zähnen 7 haftendes Pressgut abgestreift werden. Unterhalb der Rotorwalze 6 verläuft parallel zu dieser die Förderrolle 35, die mit ihrer Arbeitsdrehrichtung D, hier gegen den Uhrzeigersinn, antreibbar ist. Rechts unterhalb der Förderrolle 35 ist der dem Übergabebereich 11 nächstliegende Teile des Bodens 3 sichtbar, auf dem ein Abschnitt einer der darauf angeordneten Rippen 31 erkennbar ist. In gestrichelten Linien ist ein Teil der Förderschwinge 4 mit dem Förderkopf 40 in ihrer dem Übergabebereich 11 zugewandten Endstellung gezeichnet. Links von der Förderrolle 35 liegt die Gleit- und Führungsplatte 34. Wie die Figur 9 veranschaulicht, bildet die Förderrolle 35 mit ihrem Außenumfang einen gerundeten Übergang von dem Boden 3 zu der Gleit- und Führungsplatte 34. Der Außenumfang der Förderrolle 35 ist strukturiert, beispielsweise durch in deren Längsrichtung verlaufende Stäbe oder Leisten, um eine gute Förderwirkung auf das dem Übergabebereich 11 zugeführte Pressgut zu gewährleisten. Mittels der rotierenden Rotorwalze 6 mit den Zähnen 7 wird dann das Pressgut zwischen der Rotorwalze 6 und der unter dieser angeordneten Gleit- und Führungsplatte 34 hindurch transportiert und schon vorverdichtet und dann durch die Beschickungsöffnung 72 in die Presskammer 71 der nachgeschalteten Ballenpresse 70 gefördert. Bei diesem Befüllen der Presskammer 71 der Ballenpresse 70 befindet sich das Pressschild 73 in seiner obersten Position, wie in Figur 9 angedeutet. Für einen Pressvorgang wird bei stillgesetzter Fördereinrichtung 14 das Pressschild 73 durch einen hier nicht dargestellten Kraftantrieb, wie Hydraulikzylinder, nach unten verfahren.

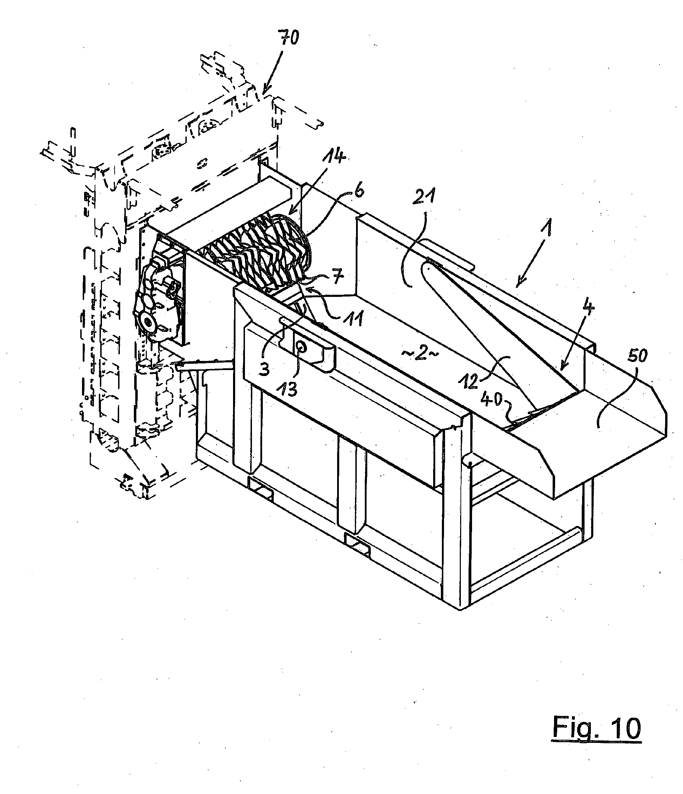

Figur 10 zeigt die Zuführeinrichtung 1 zusammen mit der Förder- und/oder Presseinrichtung 14 und der angedeuteten Ballenpresse 70 in einer perspektivischen Ansicht schräg von oben. Die Förderschwinge 4 befindet sich hier in ihrer von der Rotorwalze 6 abgewandten Endposition. Aus dieser Stellung ist die Förderschwinge 4 um ihre Schwenkachse 13 nach vorne, das heißt in Richtung zur Rotorwalze 6, verschwenkbar, um in den Einfüllraum 2 eingebrachtes Pressgut in den Übergabebereich 11 zur Förder- und/oder Presseinrichtung 14 zu transportieren.

Ganz rechts in Figur 10 ist ein Pressgutaufgabetisch 50 erkennbar, der im Wesentlichen horizontal verläuft und der an das von der Rotorwalze 6 abgewandte Ende des Bodens 3 der Zuführeinrichtung 1 anschließt. Eine Bedienungsperson kann zu verarbeitendes Pressgut auf den Pressgutaufgabetisch 50 auflegen und dann über diesen in den Einfüllraum 2 einschieben. Der Pressgutaufgabetisch 50 kann auch mit seinem freien Ende nach oben verschwenkbar sein, um aufgelegtes Pressgut in den Einfüllraum 2 zu kippen.

Das Einbringen von Pressgut in den Einfüllraum 2 kann dabei unabhängig von der aktuellen Position der Förderschwinge 4 jederzeit, d.h. kontinuierlich, erfolgen, da es unerheblich ist, ob das gerade eingebrachte Pressgut vor oder hinter den Förderkopf 40 fällt. Dies ist auch ein wesentlicher Unterschied und Vorteil gegenüber dem eingangs zitierten Stand der Technik mit einem flächigen Förderschild, denn bei diesem ist eine kontinuierliche Befüllung des Einfüllraums nicht möglich. Wenn dort Pressgut hinter das Förderschild gelangt, führt dies leicht zu Störungen.

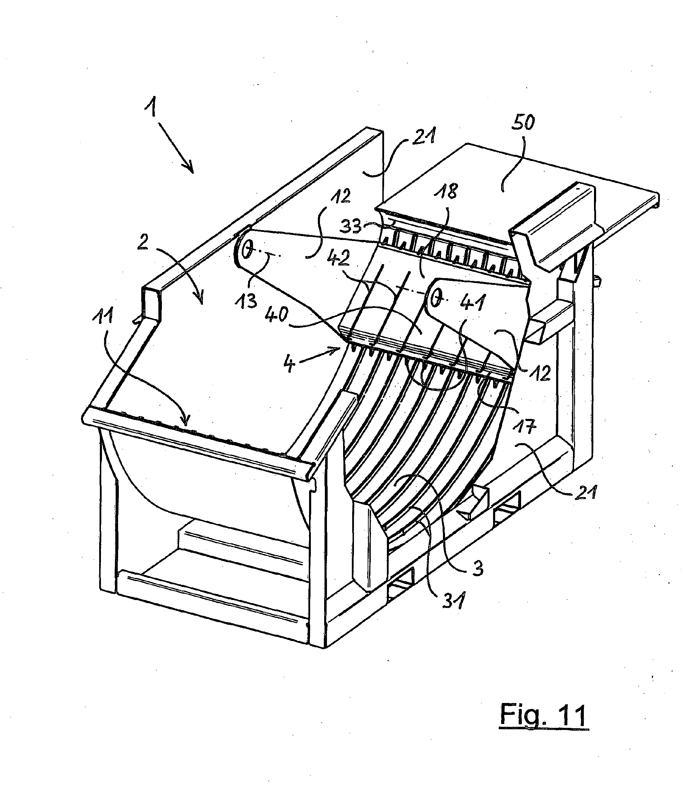

Die Figur 11 der Zeichnung zeigt die Zuführeinrichtung 1 in einer weiteren Ausführung, teils in aufgebrochener Darstellung, ein Ansicht schräg von oben, so dass der Blick des Betrachters in das Innere der Zuführeinrichtung 1 fällt. Die Zuführeinrichtung 1 besitzt auch hier einen Einfüllraum 2 mit Seitenwänden 21 und einem Boden 3. Im Einfüllraum 2 ist wieder eine Förderschwinge 4 um eine Schwenkachse 13 hin und her verschwenkbar. Der Boden 3 ist in Form eines Zylindermantelabschnitts gebogen, wobei die Mittelachse des gedachten Zylinders durch die oberhalb des Bodens verlaufende Schwenkachse 13 der Förderschwinge 4 verläuft.

Die Förderschwinge 4 besteht aus dem Förderkopf 40 und den zwei seitlichen Schwingenarmen 12, deren oberes Ende jeweils in der Schwenkachse 13 an den Seitenwänden 21 gelagert ist. Weiter besitzt der Förderkopf 40 eine im Wesentlichen rechtwinklig zum Boden 3 ausgerichtete Vorderseite 17 und eine unter einem flachen stumpfen Winkel zum Boden 3 ausgerichtete Rückseite 18. Zum Antreiben der Förderschwinge 4 dient ein Kraftantrieb, der hier nicht dargestellt ist.

Auf dem Boden 3 sind parallel zueinander verlaufende Rippen 31 angeordnet, z.B. als Leisten angebaut oder einstückig angeformt, die parallel zur Schwenkrichtung der Förderschwinge 4 und zur Bewegungsrichtung des Förderkopfes 40 verlaufen. An der Vorderseite 17 des Förderkopfes 40 sind Förderzinken 41 angeordnet, deren freies Ende sich jeweils zwischen die Rippen 31 erstreckt.

Weiterhin ist der Förderkopf 40 mit gelenkig angebrachten Mitnehmern 42 ausgestattet, die hier in Form von senkrecht zur Oberfläche des Bodens 3 ausgerichteten Platten ausgeführt sind. Wenn der Förderkopf 40 bei seiner Bewegung in Förderrichtung, das heißt in Figur 11 nach vorne, auf Pressgut trifft, bewegt das Pressgut die Mitnehmer 42 nach oben, wodurch die wirksame Fläche der Vorderseite 17 des Förderkopfes 40 vergrößert wird.

An ihrer in Figur 11 hinten liegenden Zuführseite besitzt die Zuführeinrichtung 1 einen horizontal ausgerichteten Pressgutaufgabetisch 50. Zum Eingeben von Pressgut in die Zuführeinrichtung 1 wird das Pressgut zunächst auf dem Pressgutaufgabetisch 50 abgelegt und dann auf diesem nach vorne, das heißt in Richtung zum Einfüllraum 2, geschoben. Über die vordere Kante des Pressgutaufgabetisches 50 fällt dann das Pressgut in den Einfüllraum 2, wo es durch die hin und her bewegte Förderschwinge 4 einem in Figur 11 vorne liegenden Übergabebereich 11 zu einer hier nicht dargestellten Förder- und/oder Presseinrichtung zugefördert wird. Das in Figur 11 hintere Ende des Bodens 3 geht in einen Pressgutrückführbogen 33 über, welcher dafür sorgt, dass Pressgut, welches sich an der Rückseite 18 des Förderkopfes 40 befindet, über den Förderkopf 40 hinweg zu dessen Vorderseite 17 gefördert wird, wenn die Förderschwinge 4 ihren hinteren Umkehrpunkt erreicht.

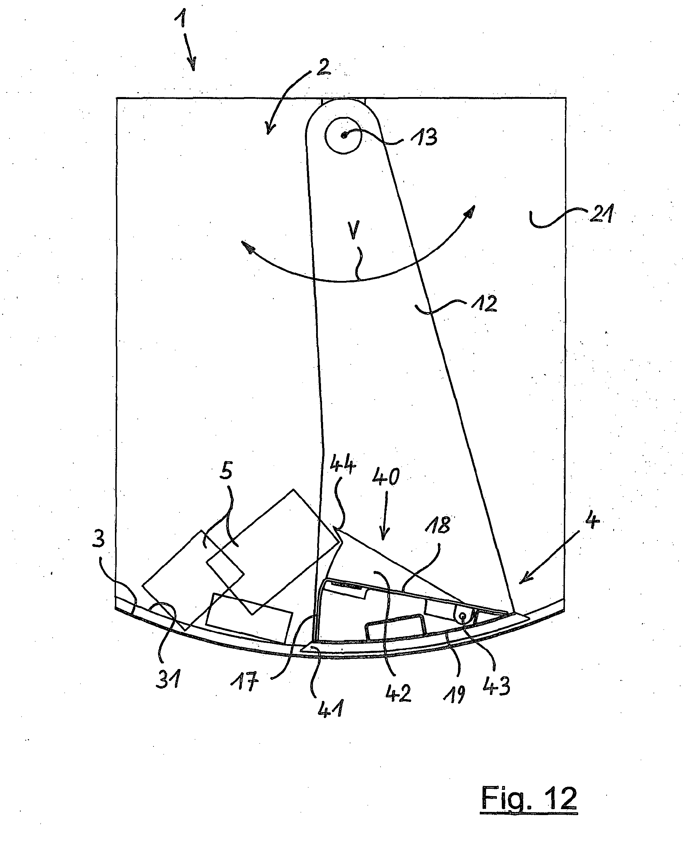

In Figur 12 ist ein Detail der Zuführeinrichtung 1 aus Figur 11 vergrößert dargestellt, wobei hier insbesondere die Förderschwinge 4 mit ihrem Förderkopf 40 sichtbar ist. Ganz unten in Figur 12 liegt ein Abschnitt des Bodens 3 mit einer der auf seiner Oberseite angeordneten Rippen 31. Der Förderkopf 40 besitzt die im Wesentlichen senkrecht zur Oberfläche des Bodens 3 verlaufende Vorderseite 17 sowie eine unter einem großen, stumpfen Winkel zur Oberfläche des Bodens 3 verlaufende Rückseite 18.

In dem Förderkopf 40 sind die Mitnehmer 42 um eine gemeinsame Achse 43 verschwenkbar gelagert, wobei die Achse 43 parallel zur Schwenkachse 13 der Förderschwinge 4 verläuft. In Figur 12 ist die Förderschwinge 4 während ihrer Bewegung in Förderrichtung gezeigt, in der sie sich im Uhrzeigersinn bewegt. Im Einfüllraum 2 befindliches Pressgut 5, zum Beispiel Kartonagen, wird von der Vorderseite 17 des Förderkopfes 40 erfasst und weiter befördert. Durch die Andrückkraft, die dabei ausgeübt wird, sorgen die Teile des Pressguts 5 dafür, dass die Mitnehmer 42 in ihre in Figur 12 sichtbare, nach oben verschwenkte Stellung gelangen. Dieses Verschwenken wird durch je Mitnehmer 42 einen nach vorne vorstehenden Zahn 44 gefördert. Insgesamt wird so im Hinblick auf das Pressgut 5 eine vergrößerte Fläche der Vorderseite 17 des Förderkopfes 40 geschaffen. Wenn die Förderschwinge 4 sich zurück bewegt, also gemäß Figur 12 gegen den Uhrzeigersinn verschwenkt wird, fallen die Mitnehmer 42 unter der Wirkung ihres Eigengewichts in den Förderkopf 40 zurück und behindern so nicht dem Übertritt von Pressgut 5 über den Förderkopf 40 hinweg von dessen Rückseite 18 zu dessen Vorderseite 17.

An der Unterseite 19 des Förderkopfes 40 ist einer der dort vorgesehenen parallelen Förderzinken 41 erkennbar, wobei jeder Förderzinken 41 durch den Zwischenraum zwischen zwei benachbarten Rippen 31 verläuft.

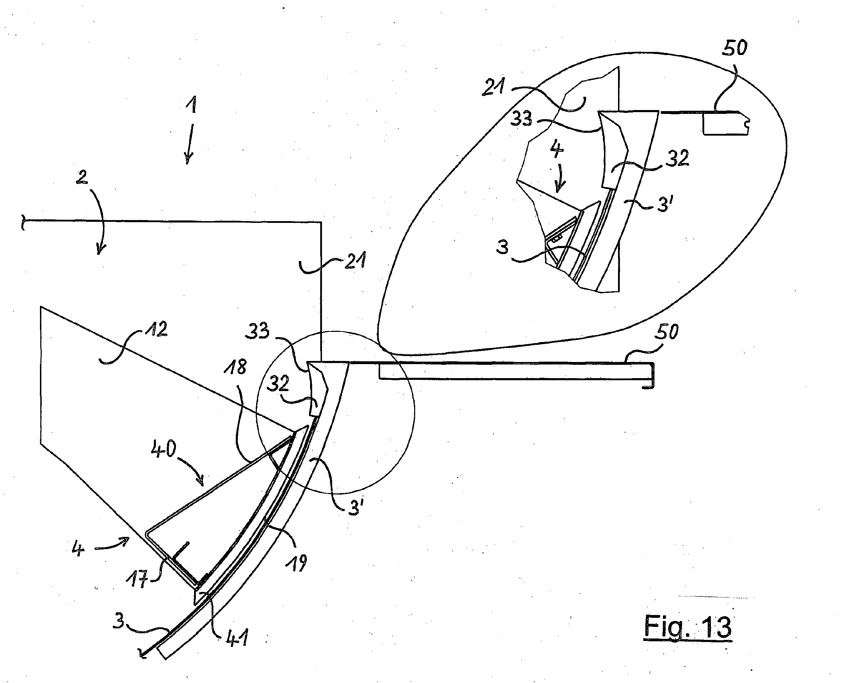

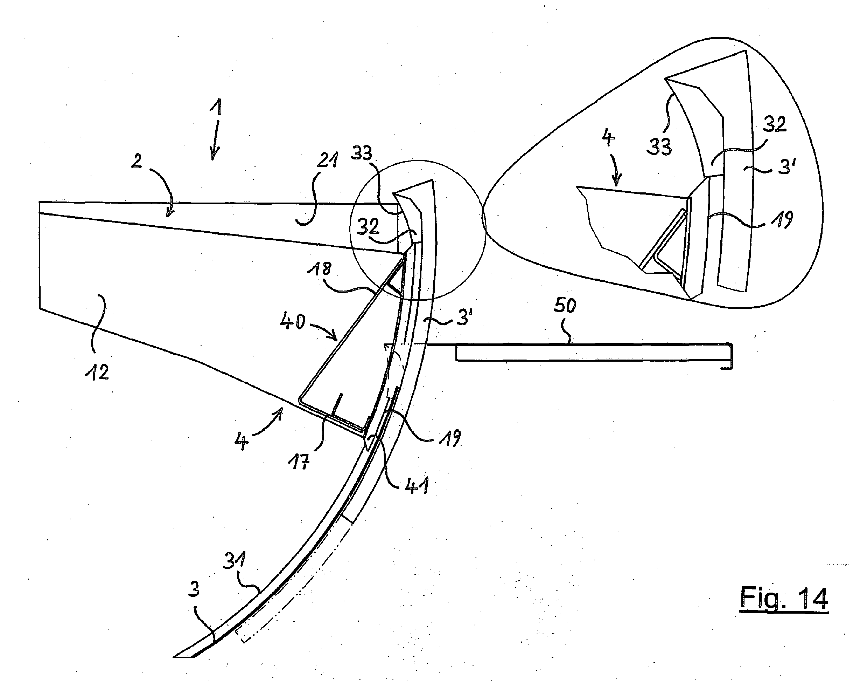

In den Figuren 13 und 14 ist eine weitere Ausführung der Zuführeinrichtung 1 dargestellt. Für dieses Ausführungsbeispiel ist charakteristisch, dass der Boden 3 in seinem dem Pressgutaufgabetisch 50 benachbarten Bereich einen verschwenkbaren Bodenteil 3' aufweist. Dabei ist auch der Bodenteil 3' in Form eines Hohlzylinderabschnitts ausgeführt und parallel zum übrigen Boden 3 verschwenkbar.

In Figur 13 ist der verschwenkbare Bodenteil 3' in seiner unteren Grundstellung gezeigt, in der eine obere Kante des Bodenteils 3' mit der horizontalen Fläche des Pressgutaufgabetisches 50 bündig liegt. In dieser Stellung des Bodenteils 3' kann Pressgut vom Pressgutaufgabetisch 50 in den Einfüllraum 2 eingeschoben werden. Der Förderkopf 40 der Förderschwinge 4 befindet sich hier in einer Stellung unterhalb der Ebene des Pressgutaufgabetisches 50. Nahe der oberen Kante des verschwenkbaren Bodenteil 3' ist ein Mitnehmer 32 angebracht, der je nach Stellung der Förderschwinge 4 mit der hinteren Kante des Förderkopfes 40 in und außer Eingriff tritt. Der obere Endabschnitt des verschwenkbaren Bodenteils 3' bildet einen Pressgutrückführbogen 33 mit der weiter oben schon beschriebenen Funktion.

Rechts oben in Figur 13 ist der eingekreiste Bereich der Zuführeinrichtung 1 nochmals vergrößert dargestellt.

Figur 14 zeigt in gleicher Darstellung wie die Figur 13 die Zuführeinrichtung 1 in einer zweiten Betriebsstellung. In dieser Betriebsstellung hat die Förderschwinge 4 ihrem hinteren Umkehrpunkt annähernd erreicht, wobei sich nun der Förderkopf 40 zumindest zum Teil in einer Höhe oberhalb des Pressgutaufgabetisches 50 befindet. In dieser Position steht der Mitnehmer 32 des verschwenkbaren Bodenteils 3' in Eingriff mit der hinteren, in Figur 14 nach oben weisende Kante des Förderkopfes 40. Dabei hat die Förderschwinge 4 den Bodenteil 3' um einen gewissen Weg nach oben hin verschwenkt, so dass nun der verschwenkbare Bodenteil 3' zum Teil oberhalb der Oberfläche des Pressgutaufgabetisches 50 liegt. In dieser Betriebsstellung sperrt der verschwenkbare Bodenteil 3' das Einschieben von Pressgut vom Pressgutaufgabetisch 50 in den Einfüllraum 2 und schützt das an der Zuführeinrichtung 1 tätige Bedienungspersonal vor Gefahren, insbesondere durch infolge von Kontakt mit dem Förderkopf 40 plötzlich hochschlagendes Pressgut.

Eventuell an der Rückseite 18 des Förderkopfes 40 befindliches Pressgut wird mittels des Pressgutrückführbogens 33 über den Förderkopf 40 hinweg nach vorne bewegt und fällt dann nach unten in den tiefsten Bereich des Einfüllraums 2, um von dort beim nächsten Förderhub der Förderschwinge 4 in Förderrichtung mitgenommen zu werden.

Rechts oben in Figur 14 ist der eingekreiste Bereich der Zeichnungsfigur nochmals als vergrößertes Detail dargestellt.

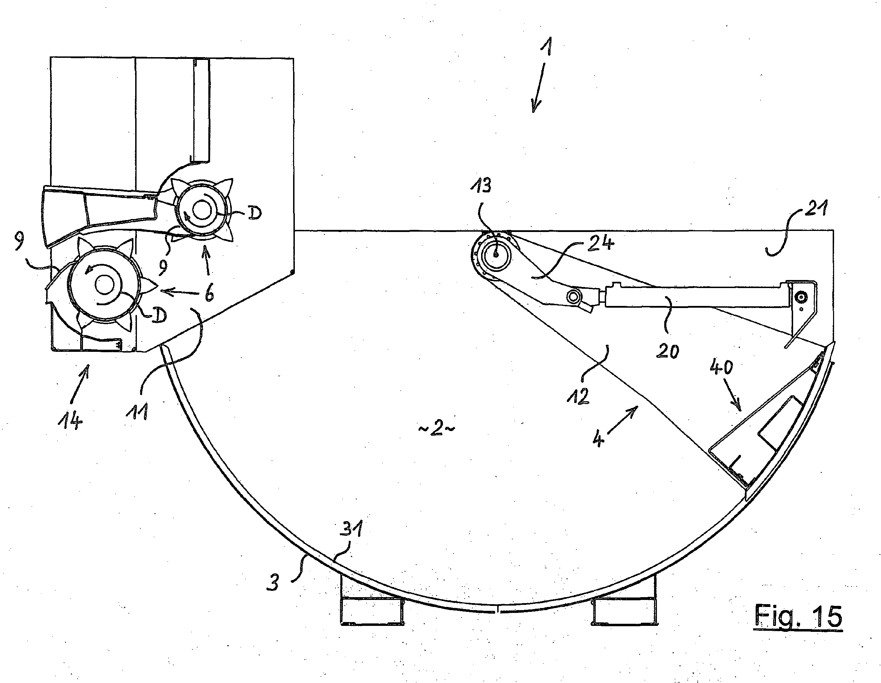

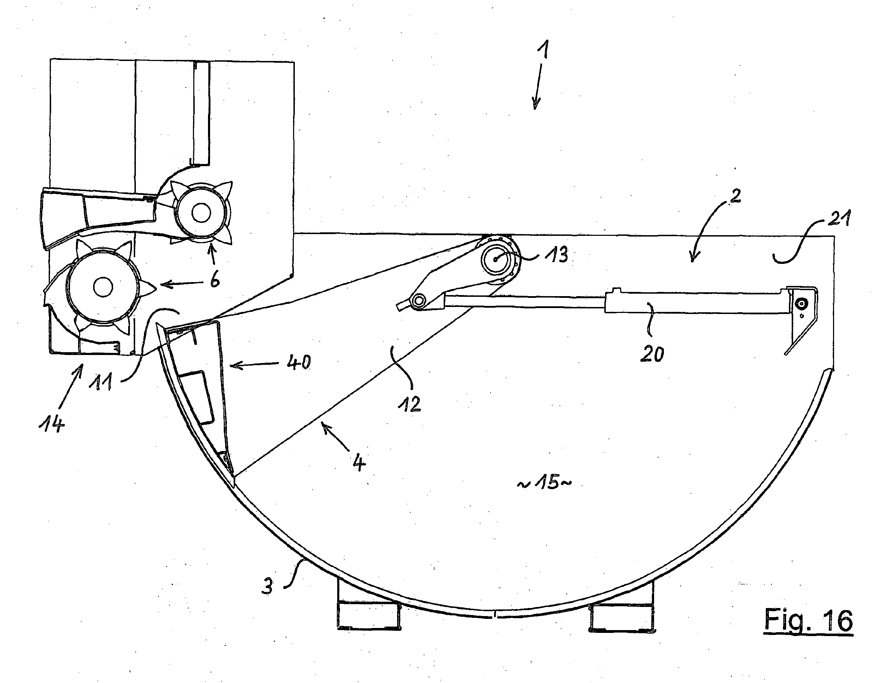

In den Figuren 15 und 16 der Zeichnung ist eine weitere Ausführung der Zuführeinrichtung 1 gezeigt, für die charakteristisch ist, dass der Kraftantrieb 20 für die Förderschwinge 4 im Einfüllraum 2 angeordnet ist. Der Kraftantrieb 20 ist hier durch eine einzelne oder zwei parallel angeordnete hydraulische Kolben-Zylinder-Einheiten gebildet. Das eine Ende der/jeder Kolben-Zylinder-Einheit ist an einer Seitenwand 21 des Einfüllraums 2 gelenkig befestigt, das andere Ende ist jeweils mit einem Hebelarm 24 gelenkig verbunden, der seinerseits in der Drehachse 13 verdrehfest mit der Förderschwinge 4 verbunden ist. Durch Ausfahren und Einfahren der Kolbenstange der Kolben-Zylinder-Einheit(en) wird die Förderschwinge 4 in ihre hin und her gehende Schwenkbewegung versetzt.

Die Förder- und/oder Presseinrichtung 14 ist hier mit zwei gegenläufig angetriebenen Rotorwalzen 6 ausgeführt, zwischen denen das Pressgut hindurch gefördert und einem nachgeordneten, hier nicht dargestellten Sammelbehälters oder Pressraum zugeführt wird. An der Auslaufseite der beiden Rotorwalzen 6 ist jeweils ein Abstreifer 9 angeordnet.

In Figur 15 befindet sich die Förderschwinge 4 nahe ihrem hinteren Umkehrpunkt; in Figur 16 befindet sich die Förderschwinge 4 an ihrem vorderen Umkehrpunkt, so dass nun der Förderkopf 40 im Übergabebereich 11 zur Förder- und/oder Presseinrichtung 14 liegt. In dieser Stellung ist die Möglichkeit geschaffen, dass ein Überschuss an Pressgut, der von den Rotorwalzen 6 nicht unmittelbar verarbeitet werden kann, über den Förderkopf 40 nach hinten hin wieder in den Einfüllraum 2 zurückfallen kann. Eine Überlastung der Rotorwalzen 6 und ihrer Antriebe wird so vermieden.

### Bezugszeichenliste:

| Zeichen | Bezeichnung |
|---|---|
| 1 | Zuführeinrichtung |
| 2 | Einfüllraum |
| 3 | Boden von 2 |
| 3' | verschwenkbarer Bodenteil |
| 4 | Förderschwinge |
| 5 | Pressgut |
| 6 | Rotorwalze |
| 7 | Zahn |
| 8 | Drehachse von 6 |
| 9 | Abstreifer |
| 10 | Schwenkachse von 9 |
| 11 | Übergabebereich |
| 12 | Schwingenarm |
| 13 | Schwenkachse von 4 |
| 14 | Förder- und/oder Presseinrichtung |
| 15 | Behälterinnenraum |
| 16 | Sammelbehälter |
| 17 | Vorderseite von 4 |
| 17.1, 17.2 | Wandteile von 17 |
| 18 | Rückseite von 4 |
| 19 | Unterseite von 40 |
| 20 | Kraftantrieb für 4 |
| 21 | Seitenwände von 2 |
| 24 | Schwenkhebel an 4 |
| 31 | Rippen auf 3 |
| 32 | Mitnehmer an 3' |
| 33 | Pressgutrückführbogen |
| 34 | Gleit- und Führungsplatte |
| 35 | Förderrolle |
| 40 | Förderkopf |
| 41 | Förderzinken |
| 42 | Mitnehmer an 40 |
| 43 | Schwenkachse von 42 |
| 44 | Zahn an 42 |
| 50 | Pressgutaufgabetisch |
| 60 | Tischverlängerung |
| 61 | Schwenkachse von 60 |
| 62 | freie Seite von 60 |
| 63 | Bogenteil |
| 70 | Ballenpresse |
| 71 | Presskammer |
| 72 | Beschickungsöffnung |
| 73 | Pressschild |
| D | Arbeitsdrehrichtung der Rotorwalze(n) |
| V | Verschwenkrichtung der Förderschwinge |

## Patentansprüche

1. Förder- und/oder Presseinrichtung (14), insbesondere einer Ballenpresse oder eines Sammelbehälters (16), mit einer vorgeschalteten Zuführeinrichtung (1) mit einem Einfüllraum (2) für Pressgut (5), wobei der Boden (3) des Einfüllraums (2) in Form eines Zylindermantelabschnitts gebogen ist, wobei im Einfüllraum (2) eine mittels eines Kraftantriebes hin und her verschwenkbare Fördereinrichtung vorgesehen ist, deren Schwenkachse (13) mit einer gedachten Mittelachse des Zylindermantelabschnitts zusammenfällt, wobei die Fördereinrichtung eine Förderschwinge (4) mit einem mit zwei Förderschwingenarmen (12) unbeweglich verbundenen Förderkopf (40) ist, wobei der Förderkopf (40) über den Boden (3) hin und her bewegbar ist, wobei ein Raum radial innen vom Förderkopf (40) zwischen den Schwingenarmen (12) der Förderschwinge (4) einen Durchgang von Pressgut (5) erlaubend stets frei ist und wobei an den Übergabebereich (11) anschließend eine drehantreibbare Rotorwalze (6) oder zwei parallele, gegensinnig drehantreibbare Rotorwalzen (6) zur weiteren Förderung und/oder zum Pressen des Pressguts (5) angeordnet ist/sind,
**dadurch gekennzeichnet,**
- **dass** der Boden (3) des Einfüllraums (2) in einem Übergabebereich (11) vor der Förder- und/oder Presseinrichtung (14) ansteigt und
- **dass** der Förderkopf (40) zu einer mengenmäßig begrenzten Förderung des Pressguts (5) aus einer Lage im unteren Bereich des Bodens (3) aufwärts zu dem Übergabebereich (11) bewegbar ist und eine wirksame fördernde Fläche einer begrenzten Größe hat, derart, dass ein Überschuss an Pressgut (5), der von der Rotorwalze/den Rotorwalzen (6) nicht unmittelbar verarbeitet werden kann, über den Förderkopf (40) hinweg zwischen den Schwingenarmen (12) hindurch zurück in den tiefsten Bereich des Einfüllraums (2) fallen kann.

2. Förder- und/oder Presseinrichtung nach Anspruch 1, **dadurch gekennzeichnet, dass** in Radialrichtung der Förderschwinge (4) gesehen der Förderkopf (40) vom Boden (3) ausgehend eine Höhe (h) hat, die sich über maximal 25%, vorzugsweise über 10 bis 20%, des Radius (R) der Förderschwinge (4) erstreckt.

3. Förder- und/oder Presseinrichtung nach einem der vorhergehenden Ansprüche, **dadurch gekennzeichnet, dass** der Winkel, über den die Förderschwinge (4) verschwenkbar ist, zwischen 60° und 180°, vorzugsweise zwischen 90° und 150°, beträgt.

4. Förder- und/oder Presseinrichtung nach einem der vorhergehenden Ansprüche, **dadurch gekennzeichnet, dass** der Boden (3) des Einfüllraums (2) in dem Übergabebereich (11) einen Steigungswinkel α zwischen 25° und 90°, vorzugsweise zwischen 45° und 65°, zur Horizontalen aufweist.

5. Förder- und/oder Presseinrichtung nach einem der vorhergehenden Ansprüche, **dadurch gekennzeichnet, dass** der Förderkopf (40) der Förderschwinge (4) mit einer gegen die Förderrichtung weisenden, unter einem flachen, stumpfen Winkel β schräg zum Boden (3) verlaufenden Rückseite (18) ausgebildet ist.

6. Förder- und/oder Presseinrichtung nach einem der vorhergehenden Ansprüche, **dadurch gekennzeichnet, dass** der Förderkopf (40) der Förderschwinge (4) mit einer in Förderrichtung zum Übergabebereich (11) weisenden und rechtwinklig zum Boden (3) verlaufenden Vorderseite (17) ausgebildet ist.

7. Förder- und/oder Presseinrichtung nach einem der vorhergehenden Ansprüche, **dadurch gekennzeichnet, dass** der Förderkopf (40) der Förderschwinge (4) an einer in Förderrichtung zum Übergabebereich (11) weisenden Vorderseite (17) Mitnehmer (42) trägt, die um eine parallel zur Vorderseite (17) hinter dieser verlaufende Schwenkachse (43) passiv verschwenkbar sind.

8. Förder- und/oder Presseinrichtung nach Anspruch 7, **dadurch gekennzeichnet, dass** die Mitnehmer (42) als vertikal ausgerichtete, in ihrer Grundform spitzwinklig dreieckige Platten oder Körper ausgeführt sind, wobei deren Schwenkachse (43) durch die spitze, hintere Ecke des Dreiecks verläuft und wobei eine vordere obere Ecke mit wenigstens einem über den Förderkopf (40) vorstehenden Zahn (44) ausgebildet ist.

9. Förder- und/oder Presseinrichtung nach einem der vorhergehenden Ansprüche, **dadurch gekennzeichnet, dass** der Boden (3) des Einfüllraums (2) auf seiner Oberseite parallele Rippen (31) aufweist, die in Bewegungsrichtung der Förderschwinge (4) verlaufen.

10. Förder- und/oder Presseinrichtung nach Anspruch 9, **dadurch gekennzeichnet, dass** an der Vorderseite (17) des Förderkopfes (40) zwischen die Rippen (31) greifende Förderzinken (41) angeordnet sind.

11. Förder- und/oder Presseinrichtung nach Anspruch 10, **dadurch gekennzeichnet, dass** die Förderzinken (41) gelenkig mit dem Förderkopf (40) verbunden sind.

12. Förder- und/oder Presseinrichtung nach Anspruch 10 oder 11, **dadurch gekennzeichnet, dass** jeder Rippe (31) ein Paar von zwei Förderzinken (41) des Förderkopfes (40) zugeordnet ist, die beiderseits der Rippe (31) verlaufen.

13. Förder- und/oder Presseinrichtung nach einem der Ansprüche 10 bis 12, **dadurch gekennzeichnet, dass** die Förderzinken (41) als einzeln mit dem Förderkopf (40) verbundene Finger oder als mit dem Förderkopf (40) verbundener Zinkenkamm ausgeführt sind.

14. Förder- und/oder Presseinrichtung nach einem der vorhergehenden Ansprüche, **dadurch gekennzeichnet, dass** an der Vorderseite (17) des Förderkopfes (40) eine Bürste oder eine Reihe aus mehreren Bürsten angeordnet ist.

15. Förder- und/oder Presseinrichtung nach einem der vorhergehenden Ansprüche, **dadurch gekennzeichnet, dass** die Vorderseite (17) des Förderkopfes (40) in ihrer Höhe verstellbar ist.

16. Förder- und/oder Presseinrichtung nach Anspruch 15, **dadurch gekennzeichnet, dass** der Förderkopf (40) als im Querschnitt dreieckiger Hohlkörper ausgeführt ist, wobei die Vorderseite (17) des Förderkopfes (40) aus zwei aufeinander liegenden, gegeneinander in dessen Höhenrichtung verschiebbaren und relativ zueinander fixierbaren Wandteilen (17.1, 17.2) besteht.

17. Förder- und/oder Presseinrichtung nach einem der vorhergehenden Ansprüche, **dadurch gekennzeichnet, dass** der in Form eines Zylindermantelabschnitts gebogene Boden (3) an seinem von dem Übergabebereich (11) entfernten Ende in einen gleichsinnig stärker und über die Vertikale hinaus gebogenen Pressgutrückführbogen (33) übergeht.

18. Förder- und/oder Presseinrichtung nach einem der vorhergehenden Ansprüche, **dadurch gekennzeichnet, dass** dem Einfüllraum (2) an seiner von dem Übergabebereich (11) entfernt liegenden Seite ein Pressgutaufgabetisch (50) vorgeschaltet ist, über dessen Oberfläche Pressgut (5) in den Einfüllraum (2) einschiebbar ist.

19. Förder- und/oder Presseinrichtung nach Anspruch 18, **dadurch gekennzeichnet, dass** der Boden (3) des Einfüllraums (2) in einem an den Pressgutaufgabetisch (50) angrenzenden Bereich mit einem parallel mit der Förderschwinge (4) verschwenkbaren Bodenteil (3') ausgeführt ist, wobei der Bodenteil (3') bei über den Pressgutaufgabetisch (50) reichender Lage der Förderschwinge (4) den Pressgutaufgabetisch (50) zum Einfüllraum (2) und zur Förderschwinge (4) hin sperrt und bei unter dem Pressgutaufgabetisch (50) befindlicher Förderschwinge (4) den Pressgutaufgabetisch (50) zum Einfüllraum (2) hin freigibt.

20. Förder- und/oder Presseinrichtung nach Anspruch 19, **dadurch gekennzeichnet, dass** der verschwenkbare Bodenteil (3') innerhalb seines Schwenkbereichs von der Förderschwinge (4) mitnehmbar ist.

21. Förder- und/oder Presseinrichtung nach Anspruch 18, **dadurch gekennzeichnet, dass** der Pressgutaufgabetisch (50) in Richtung zum Einfüllraum (2) eine Tischverlängerung (60) aufweist, die um eine entlang einer Aufgabetischvorderkante verlaufende Schwenkachse (61) verschwenkbar ist.

22. Förder- und/oder Presseinrichtung nach Anspruch 21, **dadurch gekennzeichnet, dass** durch die Förderschwinge (4) bei deren Schwenkbewegung im Bereich ihres hinteren Umkehrpunktes die Tischverlängerung (60) durch Kontakt mit der Förderschwinge (4) oder mit dem Förderkopf (40) mit verschwenkbar ist.

23. Förder- und/oder Presseinrichtung nach Anspruch 21 oder 22, **dadurch gekennzeichnet, dass** die Tischverlängerung (60) eine parallel zu ihrer Schwenkachse (61) gemessene Breite hat, die kleiner ist als der in gleicher Richtung gemessene Abstand zwischen den Schwingenarmen (12) der Förderschwinge (4) und dass die Tischverlängerung (60) in einem unteren Bereich ihrer Verschwenkung mit ihrer freien Seite (62) zwischen die Schwingenarme (12) ragt und auf dem Förderkopf (40) aufliegt.

24. Förder- und/oder Presseinrichtung nach einem der Ansprüche 21 bis 23, **dadurch gekennzeichnet, dass** die Tischverlängerung (60) unterseitig einen Bogen beschreibt oder einen relativ zur übrigen Tischverlängerung (60) verschwenkbaren Bogenteil (63) aufweist und dass bei nach oben verschwenkter Tischverlängerung (60) diese oder deren Bogenteil (63) den in Form eines Zylindermantelabschnitts gebogenen Boden (3) an seinem von dem Übergabebereich (11) entfernten Ende in einen gleichsinnig stärker und über die Vertikale hinaus gebogenen Pressgutrückführbogen (33) fortsetzt.

25. Förder- und/oder Presseinrichtung nach einem der Ansprüche 1 bis 24, **dadurch gekennzeichnet, dass** als Kraftantrieb (20) der Förderschwinge (4) ein linear oszillierender Kraftantrieb (20) vorgesehen ist und dass ein bewegliches Ende des Kraftantriebes (20), insbesondere eine Kolbenstange einer Kolben-Zylinder-Einheit, über einen Übersetzungswinkelhebel (22) mit einem Schwenkhebel (24) der Förderschwinge (4) gelenkig verbunden ist.

26. Förder- und/oder Presseinrichtung nach einem der vorhergehenden Ansprüche, **dadurch gekennzeichnet, dass** am dem Übergabebereich (11) zugewandten Ende des Bodens (3) eine parallel zu der Rotorwalze (6) oder zu den beiden parallelen Rotorwalzen (6) verlaufende Förderrolle (35) angeordnet ist.

27. Förder- und/oder Presseinrichtung nach einem der Ansprüche 1 bis 26, **dadurch gekennzeichnet, dass** die Zuführeinrichtung (1) eine gesonderte Einheit bildet, die über lösbare Verbindungsmittel mit der Förder- und/oder Presseinrichtung (14) oder mit einer Ballenpresse oder einem Sammelbehälter (16) verbindbar und davon trennbar ist.

28. Förder- und/oder Presseinrichtung nach einem der Ansprüche 1 bis 26, **dadurch gekennzeichnet, dass** die Zuführeinrichtung (1) integriert mit der Förder- und/oder Presseinrichtung (14) oder mit einer Ballenpresse oder einem Sammelbehälter (16) ausgeführt und fest mit dieser/diesem verbunden ist.

## Claims

1. A conveying and/or pressing device (14), in particular of a baling press or a collecting container (16), comprising a feed device (1), which is connected upstream, and comprising a filling chamber (2) for material (5) to be pressed, wherein the bottom (3) of the filling chamber (2) is curved in the form of a cylinder jacket section, wherein provision is made in the filling chamber (2) for a conveying device, which can be pivoted back and forth by means of a power drive and the pivot axis (13) of which coincides with a virtual centre axis of the cylinder jacket section, wherein the conveying device is a conveyor rocker (4) comprising a conveyor head (40), which is immovably connected to two conveyor rocker arms (12), wherein the conveyor head (40) can be moved back and forth across the bottom (3), wherein a space radially inside of the conveyor head (40) between the rocker arms (12) of the conveyor rocker (3) is always free, allowing for material (5) to be pressed to pass, and wherein a rotatably drivable rotor roller (6) or two parallel rotor rollers (6), which can be rotatably driven in the opposite direction, is/are arranged so as to connect to the transfer area (1) for further conveying and/or pressing the material (5) to be pressed,
**characterised in**
- **that** the bottom (3) of the filling chamber (2) rises in a transfer area (11) upstream of the conveying and/or pressing device (14) and
- **that** the conveyor head (40) can be moved from a position in the lower area of the bottom (3) upwards to the transfer area (11) for a quantitatively limited conveying of the material (5) to be pressed and has an effective conveying surface of a limited size such that an excess of material (5) to be pressed which cannot be processed directly by the rotor roller/the rotor rollers (6), can fall past the conveyor head (40) through the rocker arms (12) back into the lowermost area of the filling chamber (2).

2. The conveying and/or pressing device according to claim 1, **characterised in that**, viewed in radial direction of the conveyor rocker (4), the conveyor head (40), starting at the bottom (3), has a height (h), which extends across maximally 25%, preferably across 10 to 20%, of the radius (R) of the conveyor rocker (4).

3. The conveying and/or pressing device according to any one of the preceding claims, **characterised in that** the angle, about which the conveyor rocker (4) can be pivoted, is between 60° and 180°, preferably between 90° and 150°.

4. The conveying and/or pressing device according to any one of the preceding claims, **characterised in that** the bottom (3) of the filling chamber (2) in the transfer area (11) encompasses a pitch angle α of between 25° and 90°, preferably between 45° and 65°, to the horizontal.

5. The conveying and/or pressing device according to any one of the preceding claims, **characterised in that** the conveyor head (40) of the conveyor rocker (4) is embodied with a rear side (18), which is oriented opposite the conveying direction and which runs at a flatter, obtuse angle β, at an incline to the bottom (3).

6. The conveying and/or pressing device according to any one of the preceding claims, **characterised in that** the conveyor head (40) of the conveyor rocker (4) is embodied with a front side (17), which is oriented in conveying direction towards the transfer area (11) and which runs at right angles to the bottom (3).

7. The conveying and/or pressing device according to any one of the preceding claims, **characterised in that**, at a front side (17), which is oriented in conveying direction to the transfer area (11), the conveyor head (40) of the conveyor rocker (4) supports actuators (42), which can be passively pivoted about a pivot axis (43), which runs parallel to the front side (17) behind the latter.

8. The conveying and/or pressing device according to claim 7, **characterised in that** the actuators (42) are embodied as triangular plates or bodies, which are oriented vertically and which have an acute-angled basic shape, wherein the pivot axis (43) thereof runs through the acute, rear corner of the triangle and wherein a front upper corner is embodied with at least one tooth (44), which projects beyond the conveyor head (40).

9. The conveying and/or pressing device according to any one of the preceding claims, **characterised in that**, on its upper side, the bottom (3) of the filling chamber (2) encompasses parallel ribs (31), which run in the direction of motion of the conveyor rocker (4).

10. The conveying and/or pressing device according to claim 9, **characterised in that** conveyor teeth (41), which reach between the ribs (31), are arranged on the front side (17) of the conveyor head (40).

11. The conveying and/or pressing device according to claim 10, **characterised in that** the conveyor teeth (41) are connected to the conveyor head (40) in an articulated manner.

12. The conveying and/or pressing device according to claim 10 or 11, **characterised in that** a pair of two conveyor teeth (41) of the conveyor head (40), which run on both sides of the rib (31), is assigned to each rib (31).

13. The conveying and/or pressing device according to any one of claims 10 to 12, **characterised in that** the conveyor teeth (41) are embodied as fingers, which are individually connected to the conveyor head (40), or as tooth comb, which is connected to the conveyor head (40).

14. The conveying and/or pressing device according to any one of the preceding claims, **characterised in that** a brush or a row of a plurality of brushes is arranged on the front side (17) of the conveyor head (40).

15. The conveying and/or pressing device according to any one of the preceding claims, **characterised in that** the front side (17) of the conveyor head (40) can be adjusted in height.

16. The conveying and/or pressing device according to claim 15, **characterised in that** the conveyor head (40) is embodied as hollow body with a triangular cross section, wherein the front side (17) of the conveyor head (40) consists of two wall parts (17.1, 17.2), which are located on each other and which can be shifted against one another in the height direction thereof and which can be fixed relative to one another.

17. The conveying and/or pressing device according to any one of the preceding claims, **characterised in that**, at its end, which is spaced apart from the transfer area (11), the bottom (3), which is curved in the shape of a cylinder jacket section, merges into a return curve (33) for material to be pressed which is curved stronger in the same direction and beyond the vertical.

18. The conveying and/or pressing device according to any one of the preceding claims, **characterised in that** a feeding table (50) for material to be pressed via the surface of which material (5) to be pressed can be inserted into the filling chamber (2), is connected upstream of the filling chamber (2) at its side, which is remote from the transfer area (11).

19. The conveying and/or pressing device according to claim 18, **characterised in that**, in an area adjoining the feeding table (50) for material to be pressed the bottom (3) of the filling chamber (2) is embodied with a bottom part (3'), which can be pivoted parallel with the conveyor rocker (4), wherein the bottom part (3') blocks the feeding table (50) for material to be pressed towards the filling chamber (2) and towards the conveyor rocker (4) when the conveyor rocker (4) is in a position, which reaches beyond the feeding table (50) for material to be pressed, and releases the feeding table (50) for material to be pressed towards the filling chamber (2) when the conveyor rocker (4) is located below the feeding table (50) for material, which is to be pressed.

20. The conveying and/or pressing device according to claim 19, **characterised in that** the pivotable bottom part (3') within its pivot area can be entrained by the conveyor rocker (4).

21. The conveying and/or pressing device according to claim 18, **characterised in that**, in the direction towards the filling chamber (2), the feeding table (50) for material to be pressed encompasses a table extension (60), which can be pivoted about a pivot axis (61), which runs along a feeding table leading edge.

22. The conveying and/or pressing device according to claim 21, **characterised in that** the table extension (60) can also be pivoted by means of contact with the conveyor rocker (4) or with the conveyor head (40) by means of the conveyor rocker (4) in response to the pivoting movement thereof in the area of a rear reversal point.

23. The conveying and/or pressing device according to claim 21 or 22, **characterised in that** the table extension (60) has a width, which, measured parallel to the pivot axis (61) thereof, is smaller than the distance between the rocker arms (12) of the conveyor rocker (4) measured in the same direction, and that the table extension (60) projects with its free side (62) between the rocker arms (12) in a lower area of its pivoting and bears on the conveyor head (40).

24. The conveying and/or pressing device according to any one of claims 21 to 23, **characterised in that**, on the underside, the table extension (60) describes a curve or encompasses a curved part (63), which can be pivoted relative to the remaining table extension (60) and that, when the table extension (60) is pivoted upwards, said table extension or the curved part (63) thereof continues the bottom (3), which is curved in the shape of a cylinder jacket section at its end, which is spaced apart from the transfer area (11), in a return curve (33) for material to be pressed which is curved stronger in the same direction and beyond the vertical.

25. The conveying and/or pressing device according to any one of claims 1 to 24, **characterised in that** a linearly oscillating power drive (20) is provided as power drive (20) of the conveyor rocker (4), and that a movable end of the power drive (20), in particular a piston rod of a piston-cylinder unit, is connected to a pivot lever (24) of the conveyor rocker (4) via a transmission angle lever (22) in an articulated manner.

26. The conveying and/or pressing device according to any one of the preceding claims, **characterised in that** a conveyor roller (35), which runs parallel to the rotor roller (6) or to the two parallel rotor rollers (6), is arranged at the end of the bottom (3) facing the transfer area (11).

27. The conveying and/or pressing device according to any one of claims 1 to 26, **characterised in that** the feeding device (1) forms a separate unit, which can be connected to the conveying and/or pressing device (14) or to a baling press or a collecting container (16) via a releasable connecting means and which can be separated therefrom.

28. The conveying and/or pressing device according to any one of claims 1 to 26, **characterised in that** the feeding device (1) is embodied so as to be integrated with the conveying and/or pressing device (14) or with a baling press or a collecting container (16) and is fixedly connected thereto.

## Revendications

1. Dispositif de transport et/ou de compression (14), notamment d'une presse à faire des balles ou d'un récipient collecteur (16), avec un dispositif d'amenée monté en amont (1) avec un espace de remplissage (2) pour de la matière à presser (5), dans lequel le fond (3) de l'espace de remplissage (2) est plié sous forme d'une section d'enveloppe cylindrique, dans lequel un dispositif de transport pouvant pivoter en va et vient au moyen d'un entraînement mécanique est prévu dans l'espace de remplissage (2), dont l'axe de pivotement (13) coïncide avec un axe médian imaginaire de la section d'enveloppe cylindrique, dans lequel le dispositif de transport est une coulisse de transport (4) avec une tête de transport (40) reliée de manière immobile à deux bras de coulisse de transport (12), dans lequel la tête de transport (40) peut se déplacer en va et vient au-dessus du fond (3), dans lequel un espace radialement à l'intérieur de la tête de transport (40) entre les bras de coulisse (12) de la coulisse de transport (4) est toujours libre permettant un passage de matière à presser (5) et dans lequel un rouleau de rotor (6) pouvant être entraîné à rotation ou deux rouleaux de rotor parallèles (6) pouvant être entraînés à rotation à sens contraire est/sont disposé(s) à la suite de la région de remise (11) pour la poursuite du transport et/ou pour la compression de la matière à presser (5),
**caractérisé en ce**
- **que** le fond (3) de l'espace de remplissage (2) monte dans une région de remise (11) avant le dispositif de transport et/ou de compression (14) et
- **que** la tête de transport (40) peut se déplacer d'une position dans la région inférieure du fond (3) vers le haut vers la région de remise (11) pour un transport limité en termes de quantité de la matière à presser (5) et a une surface de transport efficace d'une taille limitée de telle sorte qu'un excès de matière à presser (5) qui ne peut pas être transformé directement par le rouleau de rotor/les rouleaux de rotor (6) peut tomber par dessus la tête de transport (40) en passant entre les bras de coulisse (12) de retour dans la région la plus profonde de l'espace de remplissage (2).

2. Dispositif de transport et/ou de compression selon la revendication 1, **caractérisé en ce que** la tête de transport (40) a une hauteur (h) en partant du fond (3), vue dans le sens radial de la coulisse de transport (4), qui s'étend sur 25 % maximum, de préférence sur 10 à 20 %, du rayon (R) de la coulisse de transport (4).

3. Dispositif de transport et/ou de compression selon une des revendications précédentes, **caractérisé en ce que** l'angle sur lequel la coulisse de transport (4) peut pivoter est compris entre 60° et 180°, de préférence entre 90° et 150°.

4. Dispositif de transport et/ou de compression selon une des revendications précédentes, **caractérisé en ce que** le fond (3) de l'espace de remplissage (2) présente dans la région de remise (11) un angle d'inclinaison α entre 25° et 90°, de préférence entre 45° et 65°, par rapport à l'horizontale.

5. Dispositif de transport et/ou de compression selon une des revendications précédentes, **caractérisé en ce que** la tête de transport (40) de la coulisse de transport (4) est réalisée avec un côté arrière (18) tourné à l'encontre du sens de transport, s'étendant à un angle obtus plus plat β en biais par rapport au fond (3).

6. Dispositif de transport et/ou de compression selon une des revendications précédentes, **caractérisé en ce que** la tête de transport (40) de la coulisse de transport (4) est réalisée avec un côté avant (17) tourné dans le sens de transport par rapport à la région de remise (11) et s'étendant à angle droit par rapport au fond (3).

7. Dispositif de transport et/ou de compression selon une des revendications précédentes, **caractérisé en ce que** la tête de transport (40) de la coulisse de transport (4) porte des tocs d'entraînement (42) sur un côté avant (17) tourné dans le sens de transport par rapport à la région de remise (11) qui peuvent pivoter de manière passive autour d'un axe de pivotement (43) s'étendant parallèlement au côté avant (17) derrière celui-ci.

8. Dispositif de transport et/ou de compression selon la revendication 7, **caractérisé en ce que** les tocs d'entraînement (42) sont réalisés en tant que plaques ou corps triangulaires orientés verticalement, à angle aigu dans leur forme de base, dans lequel leur axe de pivotement (43) s'étend à travers l'angle aigu arrière du triangle et dans lequel un angle supérieur avant est réalisé avec au moins une dent (44) saillant au-dessus de la tête de transport (40).

9. Dispositif de transport et/ou de compression selon une des revendications précédentes, **caractérisé en ce que** le fond (3) de l'espace de remplissage (2) présente des nervures parallèles (31) sur son côté supérieur qui s'étendent dans le sens de déplacement de la coulisse de transport (4).

10. Dispositif de transport et/ou de compression selon la revendication 9, **caractérisé en ce que** des pointes de transport (41) s'accrochant entre les nervures (31) sont disposées sur le côté avant (17) de la tête de transport (40).

11. Dispositif de transport et/ou de compression selon la revendication 10, **caractérisé en ce que** les pointes de transport (41) sont reliées de manière articulée à la tête de transport (40).

12. Dispositif de transport et/ou de compression selon la revendication 10 ou 11, **caractérisé en ce qu'**une paire de deux pointes de transport (41) de la tête de transport (40) qui s'étendent des deux côtés de la nervure (31) est associée à chaque nervure (31).

13. Dispositif de transport et/ou de compression selon une des revendications 10 à 12, **caractérisé en ce que** les pointes de transport (41) sont réalisées en tant que doigts reliés individuellement à la tête de transport (40) ou en tant que peigne à pointes relié à la tête de transport (40).

14. Dispositif de transport et/ou de compression selon une des revendications précédentes, **caractérisé en ce qu'**une brosse ou une série de plusieurs brosses est disposée sur le côté avant (17) de la tête de transport (40).

15. Dispositif de transport et/ou de compression selon une des revendications précédentes, **caractérisé en ce que** le côté avant (17) de la tête de transport (40) est réglable dans sa hauteur.

16. Dispositif de transport et/ou de compression selon la revendication 15, **caractérisé en ce que** la tête de transport (40) est réalisée en tant que corps creux triangulaire en coupe transversale, dans lequel le côté avant (17) de la tête de transport (40) se compose de deux parties de paroi (17.1, 17.2) situées l'une sur l'autre, pouvant coulisser l'une contre l'autre dans son sens de la hauteur et pouvant être fixées l'une par rapport à l'autre.

17. Dispositif de transport et/ou de compression selon une des revendications précédentes, **caractérisé en ce que** le fond (3) plié sous forme d'une section d'enveloppe cylindrique se convertit à son extrémité éloignée de la région de remise (11) en un arc de retour de matière à presser (33) plié plus fortement dans le même sens et au-delà de la verticale.

18. Dispositif de transport et/ou de compression selon une des revendications précédentes, **caractérisé en ce qu'**une table d'alimentation en matière à presser (50) est montée en amont de l'espace de remplissage (2) sur son côté situé à l'écart de la région de remise (11), au-dessus de la surface de laquelle de la matière à presser (5) peut être insérée dans l'espace de remplissage (2).

19. Dispositif de transport et/ou de compression selon la revendication 18, **caractérisé en ce que** le fond (3) de l'espace de remplissage (2) est réalisé dans une région adjacente à la table d'alimentation en matière à presser (50) avec une partie de fond pivotante (3') parallèlement à la coulisse de transport (4), dans lequel la partie de fond (3') bloque, en cas de position de la coulisse de transport (4) allant au-dessus de la table d'alimentation en matière à presser (50), la table d'alimentation en matière à presser (50) par rapport à l'espace de remplissage (2) et par rapport à la coulisse de transport (4) et libère, en cas de coulisse de transport (4) se trouvant sous la table d'alimentation en matière à presser (50), la table d'alimentation en matière à presser (50) vers l'espace de remplissage (2).

20. Dispositif de transport et/ou de compression selon la revendication 19, **caractérisé en ce que** la partie de fond pivotante (3') peut être entraînée au sein de sa région pivotante par la coulisse de transport (4).

21. Dispositif de transport et/ou de compression selon la revendication 18, **caractérisé en ce que** la table d'alimentation en matière à presser (50) présente en direction de l'espace de remplissage (2) un prolongement de table (60) qui peut pivoter autour d'un axe de pivotement (61) s'étendant le long d'une arête avant de table d'alimentation.

22. Dispositif de transport et/ou de compression selon la revendication 21, **caractérisé en ce que** le prolongement de table (60) peut pivoter par contact avec la coulisse de transport (4) ou avec la tête de transport (40) lors de son mouvement pivotant dans la région de son point de retour arrière.

23. Dispositif de transport et/ou de compression selon la revendication 21 ou 22, **caractérisé en ce que** le prolongement de table (60) a une largeur mesurée parallèlement à son axe de pivotement (61) qui est inférieure à l'écart mesuré dans le même sens entre les bras de coulisse (12) de la coulisse de transport (4) et que le prolongement de table (60) dépasse dans une région inférieure de son pivotement avec son côté libre (62) entre les bras de coulisse (12) et repose sur la tête de transport (40).

24. Dispositif de transport et/ou de compression selon une des revendications 21 à 23, **caractérisé en ce que** le prolongement de table (60) décrit côté inférieur un arc ou présente une partie d'arc (63) pouvant pivoter par rapport au prolongement de table restant (60) et que le prolongement de table (60) ou sa partie d'arc (63) prolonge le fond (3) plié sous forme d'une section d'enveloppe cylindrique à son extrémité éloignée de la région de remise (11) en un arc de retour de matière à presser (33) plié plus fortement dans le même sens et au-delà de la verticale en cas de prolongement de table (60) pivoté vers le haut.

25. Dispositif de transport et/ou de compression selon une des revendications 1 à 24, **caractérisé en ce qu'**un entraînement mécanique oscillant linéaire (20) est prévu en tant qu'entraînement mécanique (20) de la coulisse de transport (4) et qu'une extrémité mobile de l'entraînement mécanique (20), notamment une tige de piston d'un module piston-cylindre, est reliée de manière articulée par le biais d'un levier coudé de transmission (22) à un levier pivotant (24) de la coulisse de transport (4).

26. Dispositif de transport et/ou de compression selon une des revendications précédentes, **caractérisé en ce qu'**un rouleau de transport (35) s'étendant parallèlement au rouleau de rotor (6) ou aux deux rouleaux de rotor parallèles (6) est disposé à l'extrémité du fond (3) tournée vers la région de remise (11).

27. Dispositif de transport et/ou de compression selon une des revendications 1 à 26, **caractérisé en ce que** le dispositif d'amenée (1) forme un module séparé qui peut être relié par le biais de moyens de connexion amovibles au dispositif de transport et/ou de compression (14) ou à une presse à faire des balles ou un récipient collecteur (16) et peut être séparé de celui/celle-ci.

28. Dispositif de transport et/ou de compression selon une des revendications 1 à 26, **caractérisé en ce que** le dispositif d'amenée (1) est réalisé de manière intégrée au dispositif de transport et/ou de compression (14) ou à une presse à faire des balles ou un récipient collecteur (16) et relié de manière fixe à celui/celle-ci.
